(19) Europäisches Patentamt

European Patent Office

Office européen des brevets

(11) **EP 1 576 463 B1**

(12) **EUROPÄISCHE PATENTSCHRIFT**

(45) Veröffentlichungstag und Bekanntmachung des Hinweises auf die Patenterteilung:
**11.10.2006 Patentblatt 2006/41**

(21) Anmeldenummer: **03789247.8**

(22) Anmeldetag: **12.12.2003**

(51) Int Cl.:
**G06F 7/72** (2006.01)

(86) Internationale Anmeldenummer:
**PCT/EP2003/014135**

(87) Internationale Veröffentlichungsnummer:
**WO 2004/059515 (15.07.2004 Gazette 2004/29)**

(54) **MODULARE MULTIPLIKATION MIT PARALLELER BERECHNUNG DER VORAUSSCHAU-PARAMETER**

MODULAR MULTIPLICATION WITH PARALLEL CALCULATION OF LOOK-AHEAD PARAMETERS

MULTIPLICATION MODULAIRE À CALCUL PARALLÈLE DES PARAMÈTRES D'ÉVALUATION ANTICIPÉE

(84) Benannte Vertragsstaaten:
**DE FR**

(30) Priorität: **23.12.2002 DE 10260660**

(43) Veröffentlichungstag der Anmeldung:
**21.09.2005 Patentblatt 2005/38**

(73) Patentinhaber: **Infineon Technologies AG
81669 München (DE)**

(72) Erfinder:
• **FISCHER, Wieland
80469 München (DE)**
• **SEDLAK, Holger
82054 Lochhofen (DE)**
• **SEIFERT, Jean-Pierre
Mail-Stop JF2-55
Hillsborough, OR 97124 (US)**

(74) Vertreter: **Zinkler, Franz et al
Patentanwälte Schoppe, Zimmermann,
Stöckeler & Zinkler,
Postfach 246
82043 Pullach bei München (DE)**

(56) Entgegenhaltungen:
WO-A-20/04059463          DE-A- 3 631 992
DE-A- 10 111 987

**Beschreibung**

Die vorliegende Erfindung bezieht sich auf die Kryptographie und insbesondere auf Konzepte zum Berechnen einer Multiplikation eines Multiplikators und eines Multiplikanden bezüglich eines Moduls innerhalb einer kryptographischen Berechnung, wobei der Multiplikator, der Multiplikand und der Modul Parameter der kryptographischen Berechnung sind.

Die Kryptographie ist eine der wesentlichen Anwendungen für die modulare Arithmetik. Ein wesentlicher Algorithmus für die Kryptographie ist der bekannte RSA-Algorithmus. Der RSA-Algorithmus baut auf einer modularen Exponentiation auf, welche folgendermaßen dargestellt werden kann:

$$C = M^d \bmod (N).$$

Hierbei ist C eine verschlüsselte Nachricht, M ist eine nicht-verschlüsselte Nachricht, d ist der geheime Schlüssel und N ist der Modul. Der Modul N wird üblicherweise durch Multiplikation zweier Primzahlen p und q erzeugt. Die modulare Exponentiation wird mittels des bekannten Square-and-Multiply-Algorithmus in Multiplikationen zerlegt. Hierzu wird der Exponent d in Zweierpotenzen zerlegt, so daß die modulare Exponentiation in mehrere modulare Multiplikationen zerlegt werden kann. Um die modulare Exponentiation rechenmäßig effizient implementieren zu können, wird die modulare Exponentiation daher in modulare Multiplikationen zerlegt, welche dann in modulare Additionen zerlegt, werden können.

Die DE 3631992 C2 offenbart ein Kryptographie-Verfahren, bei dem die modulare Multiplikation unter Verwendung eines Multiplikations-Vorausschau-Verfahrens und unter Verwendung eines Reduktions-Vorausschau-Verfahrens beschleunigt werden kann. Das in der DE 3631992 C2 beschriebene Verfahren wird auch als ZDN-Verfahren bezeichnet und anhand von Fig. 18 näher beschrieben. Nach einem Startschritt 900 des Algorithmus werden die globalen Variablen M, C und N initialisiert. Ziel ist es, folgende modulare Multiplikation zu berechnen:

$$Z = M * C \bmod N.$$

M wird als der Multiplikator bezeichnet, während C als der Multiplikand bezeichnet wird. Z ist das Ergebnis der modularen Multiplikation, während N der Modul ist.

Hierauf werden verschiedene lokale Variablen initialisiert, auf die zunächst nicht näher eingegangen werden braucht. Anschließend werden zwei Vorausschau-Verfahren angewandt. Im Multiplikations-Vorausschau-Verfahren GEN_MULT_LA wird unter Verwendung verschiedener Look-Ahead-Regeln ein Multiplikations-Verschiebungswert $s_z$ sowie ein Multiplikations-Vorausschau-Parameter a berechnet (910). Hierauf wird der gegenwärtige Inhalt des Z-Registers einer Links-Verschiebungs-Operation um $s_z$-Stellen unterzogen (920).

Im wesentlichen parallel dazu wird ein Reduktions-Vorausschau-Verfahren GEN_Mod_LA (930) durchgeführt, um einen eduktionsverschiebungswert $S_N$ und einen Reduktions-Parameter b zu berechnen. In einem Schritt 940 wird dann der gegenwärtige Inhalt des Modul-Registers, also N, um $s_N$ Stellen nach links bzw. rechts verschoben, um einen verschobenen Modulwert N' zu erzeugen. Die zentrale Drei-Operanden-Operation des ZDN-Verfahrens findet in einem Schritt 950 statt. Hierbei wird das Zwischenergebnis Z' nach dem Schritt 920 zu dem Multiplikanden C, der mit dem Multiplikations-Vorausschau-Parameter a multipliziert ist, und zu dem verschobenen Modul N', der mit dem Reduktions-Vorausschau-Parameter b multipliziert ist, addiert. Je nach aktueller Situation können die Vorausschau-Parameter a und b einen Wert von +1, 0 oder -1 haben.

Ein typischer Fall besteht darin, daß der Multiplikations-Vorausschau-Parameter a +1 beträgt, und daß der Reduktion-Vorausschau-Parameter b -1 beträgt, so daß zu einem verschobenen Zwischenergebnis Z' der Multiplikand C hinzu addiert wird, und der verschobene Modul N' davon subtrahiert wird. a wird einen Wert gleich 0 haben, wenn das Multiplikations-Vorausschau-Verfahren mehr als eine voreingestellte Anzahl von einzelnen Links-Verschiebungen zulassen würde, also wenn $s_z$ größer als der maximal zulässige Wert von $s_z$ ist, der auch als k bezeichnet wird. Für den Fall, daß a gleich 0 ist, und daß Z' aufgrund der vorausgehenden modularen Reduktion, also der vorausgehenden Subtraktion des verschobenen Moduls noch ziemlich klein ist, und insbesondere kleiner als der verschobene Modul N' ist, muß keine Reduktion stattfinden, so daß der Parameter b gleich 0 ist.

Die Schritte 910 bis 950 werden so lange durchgeführt, bis sämtliche Stellen des Multiplikanden abgearbeitet sind, also bis m gleich 0 ist, und bis auch ein Parameter n gleich 0 ist, welcher angibt, ob der verschobene Modul N' noch größer als der ursprüngliche Modul N ist, oder ob trotz der Tatsache, daß bereits sämtliche Stellen des Multiplikanden abgearbeitet sind, noch weitere Reduktionsschritte durch Subtrahieren des Moduls von Z durchgeführt werden müssen.

Abschließend wird noch bestimmt, ob Z kleiner als 0 ist. Falls dies der Fall ist, muß, um eine abschließende Reduktion zu erreichen, der Modul N zu Z hinzuaddiert werden, damit schließlich das korrekte Ergebnis Z der modularen Multiplikation erhalten wird. In einem Schritt 960 ist die modulare Multiplikation mittels des ZDN-Verfahrens beendet.

Der Multiplikations-Verschiebungswert $s_z$ sowie der Multiplikations-Parameter a, welche im Schritt 910 durch den Multiplikations-Vorausschau-Algorithmus berechnet werden, ergeben sich durch die Topologie des Multiplikators sowie durch die eingesetzten Vorausschau-Regeln, die in der DE 3631992 C2 beschrieben sind.

Der Reduktions-Verschiebungswert $s_N$ und der Reduktions-Parameter b werden, wie es ebenfalls in der DE 3631992 C2 beschrieben ist, durch Vergleich des gegenwärtigen Inhalts des Z-Registers mit einem Wert 2/3 mal N bestimmt. Aufgrund dieses Vergleiches trägt das ZDN-Verfahren seinen Namen (ZDN = Zwei Drittel N).

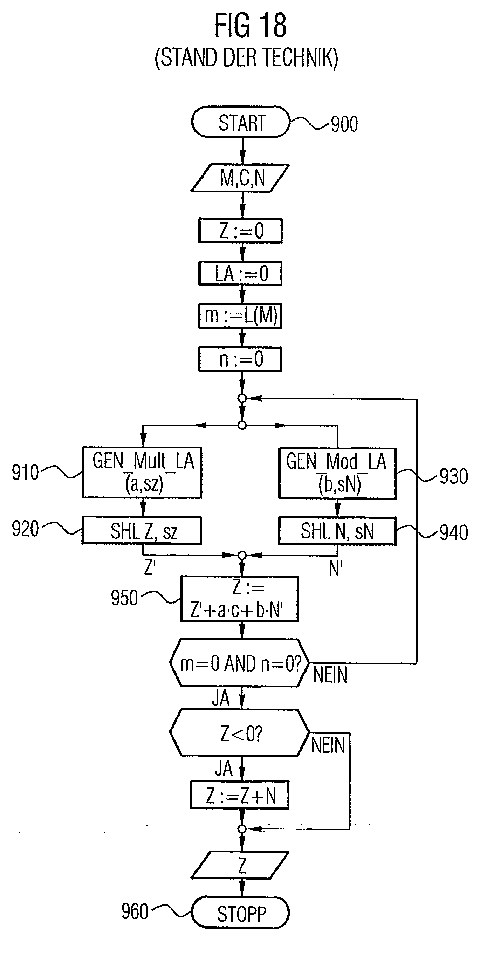

Das ZDN-Verfahren, wie es in Fig. 18 dargestellt ist, führt die modulare Multiplikation auf eine Drei-Operanden-Addition (Block 950 in Fig. 18) zurück, wobei zur Steigerung der Rechenzeiteffizienz das Multiplikations-Vorausschau-Verfahren und damit einhergehend das Reduktions-Vorausschau-Verfahren eingesetzt werden. Im Vergleich zur Montgomery-Reduktion kann daher ein Rechenzeitvorteil erreicht werden.

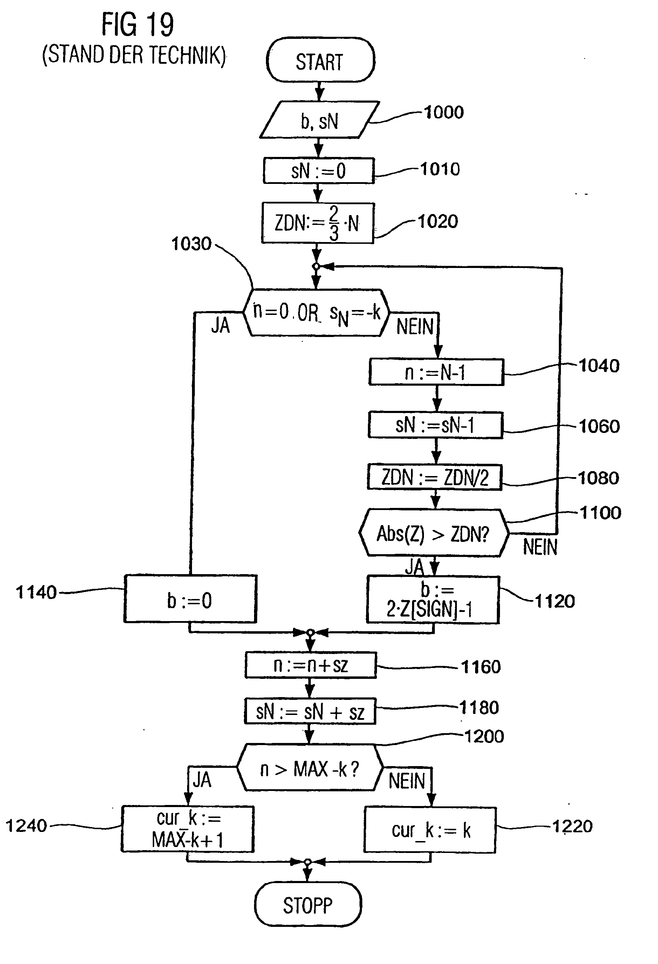

Im nachfolgenden wird anhand von Fig. 19 näher auf das Reduktions-Vorausschau-Verfahren eingegangen, das im Block 930 von Fig. 18 ausgeführt wird. Zunächst wird in einem Block 1000 eine Reservierung für die lokalen Variablen, d. h. den Reduktions-Vorausschau-Parameter b und den Reduktions-Verschiebungswert $s_N$, durchgeführt. In einem Block 1010 wird der Reduktions-Verschiebungswert $s_N$ auf Null initialisiert. Hierauf wird in einem Block 1020 der Wert ZDN berechnet, der gleich 2/3 des Moduls N ist. Dieser Wert, der im Block 1020 bestimmt wird, wird in einem eigenen Register, dem ZDN-Register, auf dem Kryptocoprozessor abgespeichert.

In einem Block 1030 wird dann bestimmt, ob die Variable n gleich 0 ist, oder ob der Verschiebungswert $s_N$ gleich -k ist. k ist ein Wert, welcher den maximalen Verschiebungswert, welcher durch die Hardware vorgegeben ist, definiert. Im ersten Durchgang wird der Block 1030 mit NEIN beantwortet, so daß in einem Block 1040 der Parameter n dekrementiert wird, und daß in einem Block 1060 auch der Reduktions-Verschiebungswert um 1 dekrementiert wird. Dann wird in einem Block 1080 die Variable ZDN neu belegt, nämlich mit ihrem halben Wert, was durch eine Rechts-Verschiebung des im ZDN-Register stehenden Werts ohne weiteres erreicht werden kann. In einem Block 1100 wird dann festgestellt, ob der Absolutwert des aktuellen Zwischenergebnisses größer als der im ZDN-Register stehende Wert ist.

Diese Vergleichsoperation im Block 1100 ist die zentrale Operation des Reduktions-Vorausschau-Verfahrens. Wird die Frage mit JA beantwortet, so ist die Iteration beendet und der Reduktions-Vorausschau-Parameter b wird, wie es im Block 1120 dargestellt ist, belegt. Wird die im Block 1100 zu beantwortende Frage dagegen mit NEIN beantwortet, so wird iterativ wieder zurückgesprungen, um die aktuellen Werte von n und $s_N$ im Block 1030 zu untersuchen. Wird der Block 1030 irgendwann in der Iteration mit JA beantwortet, so wird zu einem Block 1140 gesprungen, in dem der Reduktions-Parameter b zu Null gesetzt wird. In der in Fig. 18 im Block 950 dargestellten Drei-Operanden-Operation führt dies dazu, daß kein Modul addiert oder subtrahiert wird, was bedeutet, daß das Zwischenergebnis Z so klein war, daß keine modulare Reduktion erforderlich war. In einem Block 1160 wird dann die Variable n neu belegt, wobei dann in einem Block 1180 schließlich der Reduktions-Verschiebungs-Wert $s_N$ berechnet wird, welcher in einem Block 940 von Fig. 18 benötigt wird, um die Linksverschiebung des Moduls durchzuführen, um einen verschobenen Modul zu erreichen.

In den Blöcken 1200, 1220 und 1240 werden schließlich die aktuellen Werte von n und k hinsichtlich weiterer Variablen MAX und cur_k untersucht, um die aktuelle Belegung des N-Registers zu untersuchen, um sicherzustellen, daß keine Registerüberschreitungen stattfinden. Die näheren Details sind für die vorliegende Erfindung nicht von Bedeutung, sind jedoch in der DE 3631992 C2 detailliert beschrieben.

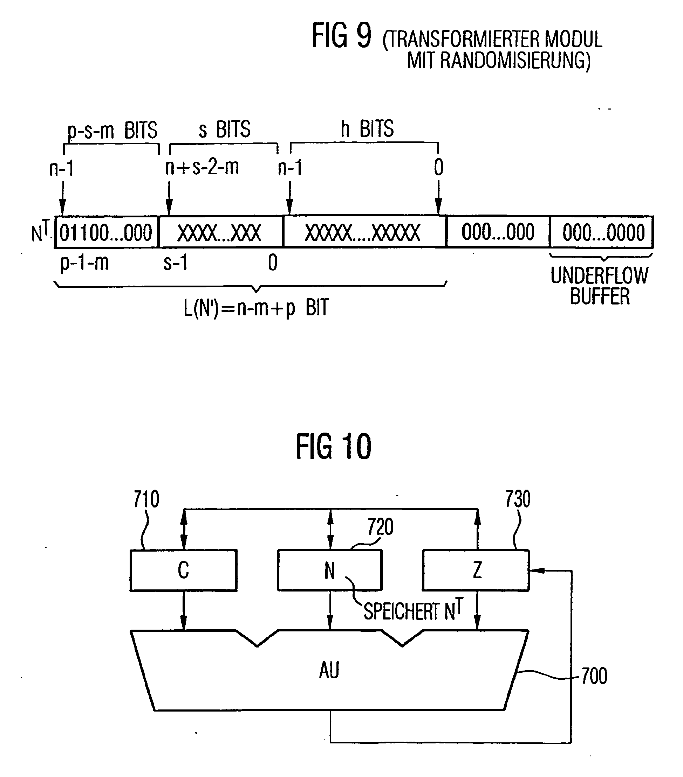

Der in den Fig. 18 und 19 dargestellte Algorithmus kann hardwaremäßig implementiert werden, wie es in Fig. 10 dargestellt ist. Für die in dem Block 950 durchzuführende Drei-Operanden-Operation wird eine arithmetische Einheit 700 benötigt, die in Fig. 10 mit AU bezeichnet ist. Dieselbe ist mit einem Register C 710 für den Multiplikanden, mit einem Register N 720 für den Modul und mit einem Register Z 730 für das aktuelle Zwischenergebnis der modularen Multiplikation gekoppelt. Aus Fig. 10 ist ferner zu sehen, daß das Ergebnis der Drei-Operanden-Operation über einen Rückkopplungspfeil wieder in das Z-Register 730 eingespeist wird. Aus Fig. 10 ist ferner die Verbindung der Register untereinander zu sehen. Der in dem Block 1020 von Fig. 19 berechnete Wert ZDN muß in einem eigenen ZDN-Register abgespeichert werden. Der ZDN-Vergleich bzw. die in Fig. 19 dargestellte Iterationschleife wird ferner durch eine eigene Steuerlogik für den ZDN-Vergleich ablaufmäßig gesteuert.

Die Hauptarbeit des ZDN-Algorithmus zur Berechnung von Z: = M x C mod N besteht daher in den folgenden beiden Operationen:

    1. Berechnung der Verschiebungswerte $s_z$ und $s_i$ für die Register Z und N, so daß folgende Gleichung erfüllt ist:

$$2/3 \ N \ x \ 2^{-si} < |Z| \leq 4/3 \ N \ x \ 2^{-si}$$

und

2. Berechnung der Drei-Operanden-Summe:

$$Z: = 2^{sz} \ Z + a \ C + b \ x \ 2^{sz-si} \ N,$$

Der Multiplikations-Vorausschau-Parameter a und der Reduktions-Vorausschau-Parameter b können, wie es bekannt ist, Werte von -1, 0 und +1 einnehmen.

Es sei darauf hingewiesen, daß das Zwischenergebnis Z, der Multiplikand C und der Modul N Langzahlen sind, also Zahlen, deren Anzahl von Stellen bzw. Bits durchaus größer als 512 sein können, wobei diese Zahlen auch bis zu über 2048 Stellen haben können.

Das vorstehend beschriebene bekannte Verfahren zur Ausführung der modularen Multiplikation hat also folgende etwas umgeschriebene Drei-Operanden-Addition der Form:

$$N: = N \ * \ 2^{sn}$$

$$Z: = Z \ * \ 2^{sz} + v_c \ * \ C + v_n \ * \ N.$$

In den vorstehenden Gleichungen bezeichnet $s_z$ den Shift-Wert des Zwischenergebnisses Z, wie er aus dem bekannten Booth-Verfahren berechnet wird, also dem Multiplikations-Look-Ahead-Verfahren. $s_n$ bezeichnet den Shift-Wert von N, wie er, wie vorstehend ausgeführt worden ist, berechnet wird.

In einer praktischen Implementation dürfen die Shift-Werte $s_z$ und $s_n$ nicht unbegrenzt groß sein, zumal hierfür Shifter zum Schieben von langen Zahlen vorgesehen werden, die nur eine Bit-Verschiebung in einem Langzahlregister bis zu einem maximalen Verschiebungswert bewältigen können. So wird bei einem Kryptographieprozessor, der gemäß dem bekannten ZDN-Verfahren arbeitet, ein Shiftwert $s_z$ zwischen 0 und 5 ermöglicht. Bezüglich der Verschiebung des Moduls wird ein Shift-Wert zwischen -3 und +3 verwendet.

Nachteilig an den begrenzten Shift-Werten ist, daß z. B. der Shift-Wert $s_z$ zur Verschiebung des Zwischenergebnisses Z aus einem vorherigen Iterationsschritt für einen aktuellen Iterationsschritt oftmals zu klein ist. Dies ist nämlich dann der Fall, wenn der Multiplikations-Vorausschau-Algorithmus feststellt, daß der Multiplikator so beschaffen ist, daß z. B. ein größerer Shift-Wert als 5 möglich ist. Dies ist dann der Fall, wenn je nach Look-Ahead-Regel z. B. mehr als 5 aufeinanderfolgende Nullen in dem Multiplikator vorkommen. Wenn daran gedacht wird, daß der Multiplikator M 1024 oder sogar 2048 Bits hat, so kann diese Situation durchaus des öfteren auftreten. Aufgrund des begrenzten Shift-Werts wird das bekannte ZDN-Verfahren in diesem "Sonderfall" damit reagieren, daß eine Drei-Operanden-Operation durchgeführt wird, und zwar mit dem maximalen Shift-Wert, daß jedoch der Multiplikations-Look-Ahead-Parameter $v_c$ zu 0 gesetzt wird, d. h. daß in diesem Schritt der Multiplikand nicht hinzuaddiert wird. Im nächsten Iterationsschritt wird dann ein erneuter Multiplikations-Verschiebungswert $s_z$ berechnet, der dann, wenn er größer als der maximale Shift-Wert $s_{zmax}$ ist, wieder begrenzt wird durch den maximalen Shift-Wert, was wieder zu einer degenerierten "Drei-Operanden-Addition" führt, bei der wieder der Multiplikand nicht hinzuaddiert wird, bei der also nur das verschobene Zwischenergebnis sowie der verschobene Modul unter Berücksichtigung des Vorzeichens für den Modul addiert werden.

Aus der vorstehenden Betrachtung ist zu sehen, daß in einem solchen Sonderfall, wenn der Multiplikations-Look-Ahead-Algorithmus eine große Verschiebung erlauben würde, diese nicht zur maximalen Effizienz umgesetzt werden kann, und zwar aufgrund des begrenzten Shift-Betrags $S_{zmax}$.

Das bekannte ZDN-Verfahren ist daher nicht in der Lage, die volle Effizienz-Steigerung des Multiplikations-Look-Ahead-Verfahrens auszunutzen. Um eine Effizienzsteigerung zu erreichen, müßte beim bekannten ZDN-Verfahren eine Shifter-Vergrößerung vorgenommen werden, die jedoch insbesondere bei integrierten Schaltungen für Chipkarten dazu führt, daß mehr Chipfläche benötigt wird, was aufgrund enger Chipflächenvorgaben von Chipkartenherstellern nicht immer tolerabel ist bzw. zu erheblichen Preissteigerungen führen kann.

An dieser Stelle sei darauf hingewiesen, daß besonders auf dem Gebiet der Kryptographieprozessoren ein eminent wettbewerbsintensiver Markt vorhanden ist, bei dem bereits kleine Unterschiede im Preis dazu führen werden, daß ein Anbieter überlebt, während ein anderer Anbieter nicht überlebt. Dies liegt daran, daß Prozessoren für Chipkarten ein Massenprodukt sind, da Chipkarten typischerweise in großen Anzahlen gefertigt werden.

Andererseits bestehen erhebliche Sicherheitsanforderungen an Chipkartenprozessoren, da Chipkarten typischerweise in der Hand von Benutzern sind, also auch in der Hand von Angreifern, die den anzugreifenden Chipkartenprozessor vollständig in ihrer Hand haben. Daher steigen Sicherheitsanforderungen an Kryptographiealgorithmen mehr und mehr, was sich beispielsweise darin bemerkbar macht, daß zur Erhöhung der Sicherheit des RSA-Algorithmus die Operanden nicht mehr nur z. B. 1024 Bit lang sind, sondern 2048 Bit lang sein müssen.

Dennoch ist vom Chipkartenhersteller die von dem Prozessor insgesamt beanspruchte Fläche fest vorgegeben. Dies bedeutet, daß ein Hersteller für Chipkartenprozessoren auf einer fest vorgegebenen Fläche Rechenwerke und platzintensive Speicher unterbringen muß. Andererseits benötigen immer aufwendigere Kryptographiealgorithmen auch mehr Arbeitsspeicher, so daß eine Vergrößerung eines Rechenwerks dahingehend, daß z. B. ein größerer Shifter eingebaut wird, aus diesem Grund oftmals nicht tolerabel ist. Würde man nämlich mehr Chipfläche dem Rechenwerk, also beispielsweise einem Shifter, zusprechen, so könnte dafür weniger Arbeitsspeicher auf der fest vorgegebenen Chipfläche implementiert werden, was wiederum dazu führt, daß bestimmte hochkomplizierte Kryptographiealgorithmen gar nicht ausgeführt werden können bzw. in der Berechnung langsamer sind als wenn sie durch Konkurrenz-Produkte ausgeführt und implementiert werden.

Das anhand der Fig. 18 und 19 erläuterte bekannte ZDN-Verfahren ist ferner dahingehend nachteilhaft, daß die Drei-Operanden-Addition des Langzahlrechenwerks, die durch den Block 950 in Fig. 18 dargestellt ist, nicht ständig ablaufen kann, sondern daß zunächst immer unter Verwendung der Blöcke 910 und 930 eine Berechnung der Vorausschau-Parameter $s_z$, $s_n$ und gegebenenfalls der Parameter a und b stattzufinden hat, bevor dann die Drei-Operanden-Addition ausgeführt werden kann. Es handelt sich um ein gewissermaßen serielles Zwei-Takt-Prinzip in einer Iterationsschleife, dahingehend, daß zuerst Vorausschauparameter berechnet werden und dann die Drei-Operanden-Addition ausgeführt wird. Während der Berechnung der Shift- und Vorzeichen-Parameter $s_z$ und $s_n$ bzw. a und b ist das Rechenwerk zum Durchführen der Drei-Operanden-Addition, die durch den Block 950 in Fig. 18 dargestellt wird, unbeschäftigt.

Die Aufgabe der vorliegenden Erfindung besteht darin, ein effizienteres Konzept zum Berechnen einer Multiplikation eines Multiplikators und eines Multiplikanden bezüglich eines Moduls zu schaffen.

Diese Aufgabe wird durch eine Vorrichtung nach Anspruch 1, ein Verfahren nach Anspruch 12 oder ein Computer-Programm nach Anspruch 13 gelöst.

Der vorliegenden Erfindung liegt die Erkenntnis zugrunde, daß die Berechnung der Vorausschau-Parameter und die Durchführung der Drei-Operanden-Addition dahingehend parallelisiert werden können, daß in einem aktuellen Iterationsschritt während der exakten Berechnung der Drei-Operanden-Addition eine approximierte Drei-Operanden-Addition durchgeführt wird, um das exakte Ergebnis abzuschätzen, und um dann unter Verwendung des abgeschätzten Ergebnisses die Look-Ahead-Parameter für den nächsten Iterationsschritt zu berechnen. Damit kann im nächsten Iterationsschritt auf die im aktuellen Iterationsschritt berechneten Vorausschau-Parameter zurückgegriffen werden, um eine exakte Berechnung des Zwischenergebnisses für den übernächsten Iterationsschritt durchzuführen etc.

Die erfindungsgemäße Vorrichtung zum Berechnen einer Multiplikation umfaßt somit eine Einrichtung zum Durchführen einer exakten Drei-Operanden-Addition, eine Einrichtung zum Durchführen einer approximierten Operanden-Addition, um ein approximiertes Zwischenergebnis zu erhalten, sowie eine Einrichtung zum Berechnen von Vorausschau-Parametern für den nächsten Iterationsschritt unter Verwendung des approximierten Zwischenergebnisses, wobei die Einrichtungen derart ausgebildet sind, daß parallel zur exakten Berechnung der Drei-Operanden-Addition eine approximierte Berechnung sowie eine Berechnung der Vorausschau-Parameter für den nächsten Schritt stattfindet.

Bei einem besonders bevorzugten Ausführungsbeispiel der vorliegenden Erfindung wird die beschleunigte Berechnung der Vorausschau-Parameter mit einem neuartigen Iterationsverfahren verbunden, bei dem der Modul fest bleibt und der Multiplikand bezüglich des Moduls verschoben wird. Diese Modifikation des bekannten ZDN-Verfahrens, das in Fig. 18 dargestellt ist, hat den Vorteil, daß eine bessere Ressourcennutzung im Hinblick auf vorhandene Schieber zum Umsetzen der Verschiebungswerte in reale Registerverschiebungen ermöglicht ist.

Bei einem weiteren bevorzugten Ausführungsbeispiel der vorliegenden Erfindung wird statt des durch eine modulare Exponentiation vorgegebenen Moduls ein von diesem Modul abgeleiteter transformierter Modul verwendet, der derart gewählt ist, daß einige obere Bits bekannt sind und unabhängig von einem aktuell verwendeten Modul immer gleich sind. In diesem Fall kann die Einrichtung zum Durchführen einer approximierten Operandenaddition, um ein approximiertes Zwischenergebnis zu erhalten, besonders einfach implementiert werden.

Erfindungsgemäß wird somit eine gute und sehr schnelle Abschätzung der gegenwärtig laufenden Drei-Operanden-Addition erreicht. Mit diesem vorzeitig vorliegenden approximierten Ergebnis werden dann, in der verbleibenden Zeit, in der noch eine exakte Drei-Operanden-Addition durchgeführt wird, die Vorausschau-Parameter berechnet. Sie stehen dann bereit, wenn die nächste Drei-Operanden-Addition beginnt. Hierdurch wird eine Beschleunigung des Verfahrens um den Faktor 2 erreicht.

Bei bevorzugten Ausführungsbeispielen der vorliegenden Erfindung wird zur schnellen Approximation davon ausgegangen, daß die zukünftigen Shift- und Vorzeichenwerte im wesentlichen nur von den obersten z. B. 12 Bits von Z abhängen, während $s_c$ nur vom Multiplikator abhängt.

Darüber hinaus wird davon ausgegangen, daß die obersten Bits von Z im wesentlichen nicht vom Multiplikanden C abhängen. Dies ist der Fall, da bei den beschriebenen iterativen Verfahren zur modularen Multiplikation die Reduktion immer etwas hinter der Multiplikation hinterher hängt. Schließlich wird bei dem Ausführungsbeispiel mit Modultransformation davon Gebrauch gemacht, daß die obersten Bits von N bekannt sind. Die Einrichtung zum Durchführen einer approximierten Operanden-Addition ist somit ausgebildet, um folgende Berechnung durchzuführen $Z [L-1, L-12] := Z [L-1, L-12] * 2^{sz} + V_n * N [L-1, L-12]$.

$Z [L-1, L-12]$ bezeichnet die obersten 12 Bits von Z. Mit diesem approximierten $Z [L-1, L-12]$ können die Shift- und Vorzeichenwerte fast immer exakt berechnet werden. In allen anderen Fällen hat man lediglich suboptimale Shift- und Vorzeichenwerte. Das Ergebnis ist jedoch immer korrekt.

Bevorzugte Ausführungsbeispiele der vorliegenden Erfindung werden nachfolgend Bezug nehmend auf die beiliegenden Zeichnungen detailliert erläutert. Es zeigen:

Fig. 1    ein Blockschaltbild einer erfindungsgemäßen Vorrichtung zum Berechnen einer Multiplikation mit einer Verschiebung des Multiplikanden;

Fig. 2    eine Registerbelegung der Register N, C und Z mit linksbündiger Modulausrichtung;

Fig. 3    eine Detaildarstellung der beiden Schieber mit begrenzten Verschiebungswerten;

Fig. 4    ein Blockschaltbild der beschleunigten Drei-Operanden-Addition mit paralleler Berechnung der Vorausschau-Parameter für den nächsten Iterationsschritt;

Fig. 5    ein Ablaufdiagramm des Modultransformationskonzepts;

Fig. 6    eine Aufteilung eines Moduls N in einen ersten Abschnitt $N_T$ von Bits und in einen zweiten Abschnitt $N_R$ von Bits;

Fig. 7    die Aufteilung des transformierten Moduls $N^T$ in einen ersten Abschnitt von Stellen mit der Länge $L (N^T)$ und die verbleibenden Stellen;

Fig. 8    eine Darstellung der Stellen des 2/3-fachen des transformierten Moduls $N^T$;

Fig. 9    eine schematische Darstellung der Stellen des transformierten Moduls mit Randomisierung;

Fig. 10   eine schematische Darstellung eines Rechenwerks zum Ausführen der modularen Multiplikation mit Modultransformation;

Fig. 11   eine schematische Darstellung einer Ausführung der Einrichtung zum Durchführen einer approximierten Operanden-Addition;

Fig. 12   eine Variablendefinition eines Computer-Programms gemäß der vorliegenden Erfindung;

Fig. 13   eine Darstellung von Hilfsfunktionen für das erfindungsgemäße Verfahren;

Fig. 14a  Initialisierungsangaben für ein Verfahren gemäß einem bevorzugten Ausführungsbeispiel;

Fig. 14b  eine programmartige Darstellung eines Ausführungsbeispiels des erfindungsgemäßen Verfahrens mit Multiplikanden-Verschiebung und paralleler Berechnung der Vorausschau-Parameter im aktuellen Iterationsschritt für den nächsten Iterationsschritt;

Fig. 15   eine detailliertere Programmdarstellung der in Fig. 14b verwendeten Drei-Operanden-Addition;

Fig. 16a  eine detailliertere Darstellung der in Fig. 14b verwendeten Funktion Look-Ahead-Modulo;

Fig. 16b  eine detailliertere Darstellung der in Fig. 14b verwendeten Funktion Nachbearbeitung_Look-AheadModulo;

Fig. 17a    eine detailliertere Darstellung der Funktion Look-Ahead-Multiplikation von Fig. 14b;

Fig. 17b    eine detaillierte Darstellung der Funktion Nachbearbeitung_Look-Ahead-Multiplikation;

Fig. 18    eine Flußdiagrammdarstellung des bekannten ZDN-Verfahrens; und

Fig. 19    eine Flußdiagrammdarstellung des bekannten Reduktions-Vorausschau-Verfahrens.

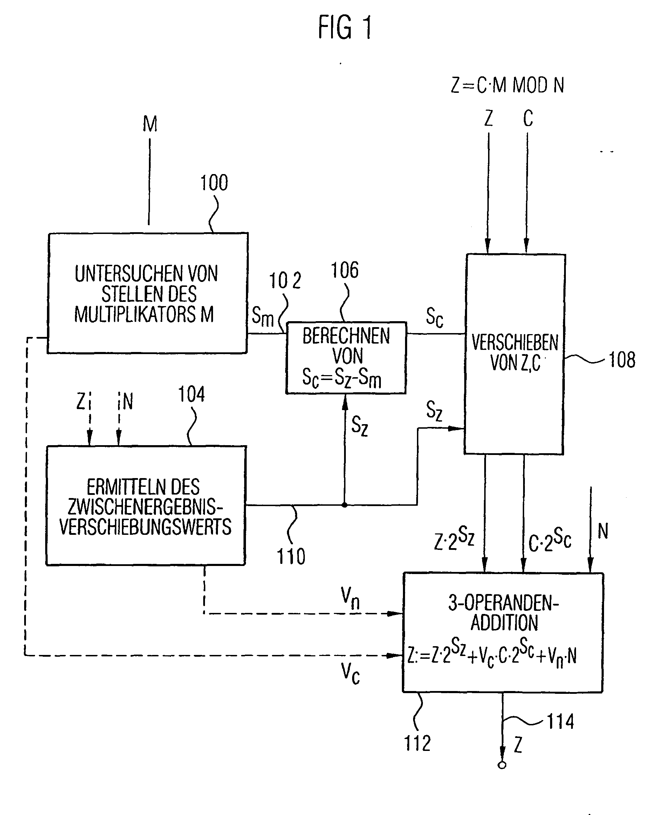

Fig. 1 zeigt ein Blockschaltbild der erfindungsgemäßen Vorrichtung zum Berechnen einer Multiplikation eines Multiplikators M und eines Multiplikanden C bezüglich eines Moduls N mittels eines Iterationsverfahrens mit mehreren Iterationsschritten. Es sei darauf hingewiesen, daß der Multiplikator, der Multiplikand und der Modul Ganzzahlen oder Polynome sein können.

Wie es Bezug nehmend auf Fig. 18 ausgeführt worden ist, sind Multiplikationskonzepte insbesondere in kryptographischen Berechnungen iterative Konzepte, derart, daß eine Multiplikation unter Verwendung mehrerer prinzipiell identisch ablaufender Iterationsschritte berechnet wird. Fig. 1 zeigt die Einrichtungen bzw. Unterschritte, die beim Ausführen eines Iterationsschritts betroffen sein können.

Im einzelnen umfaßt Fig. 1 eine Einrichtung 100 zum Untersuchen von Stellen des Multiplikators M für einen aktuellen Iterationsschritt mittels eines Multiplikations-Look-Ahead-Algorithmus, um einen Multiplikations-Look-Ahead-Verschiebungswert $s_m$ an einem Ausgang 102 der Einrichtung 100 zu erhalten.

Bei einem bevorzugten Ausführungsbeispiel der vorliegenden Erfindung ist der Multiplikations-Look-Ahead-Algorithmus ein bekannter Booth-Algorithmus, der, wenn er mehrere Look-Ahead-Regeln implementiert, neben einem Multiplikations-Look-Ahead-Verschiebungswert $s_m$ auch einen Multiplikations-Look-Ahead-Parameter $v_c$ erzeugt. Die explizite Berechnung eines Look-Ahead-Parameters ist jedoch dann nicht erforderlich, wenn der Multiplikations-Look-Ahead-Algorithmus lediglich eine oder eine begrenzte Anzahl von Look-Ahead-Regeln anwendet, derart, daß - vorausgesetzt, es sind ausreichend große Shifter vorhanden - der Vorzeichen-Parameter $v_c$ immer gleich "+1" ist. Für andere Look-Ahead-Regeln, kann jedoch auch der Fall auftreten, daß der Vorzeichenparameter $v_c$ gleich -1 ist. Wenn ein zu großer Multiplikations-Look-Ahead-Verschiebungswert $s_m$ erhalten worden ist, kann auch der Fall auftreten, daß der Multiplikations-Look-Ahead-Parameter $v_c$ gleich 0 ist.

Die in Fig. 1 gezeigte Vorrichtung umfaßt ferner eine Einrichtung 104 zum Ermitteln des Zwischenergebnis-Verschiebungswerts $s_z$, die prinzipiell so ausgebildet ist, daß sie einen Zwischenergebnis-Verschiebungswert größer als 0 ermittelt, wobei der Zwischenergebnis-Verschiebungswert bewirkt, daß ein zu verarbeitendes Zwischenergebnis, wenn es um den Zwischenergebnis-Verschiebungswert $s_z$ verschoben worden ist, ein höchstwertiges Bit (MSB) hat, dessen Ordnung näher an einer Ordnung des höchstwertigen Bits des Moduls liegt als ein höchstwertiges Bit des Zwischenergebnis aus dem vorausgehenden Iterationsschritts. In anderen Worten ausgedrückt bedeutet dies, daß der Zwischenergebnis-Verschiebungswert $s_z$ dazu führt, dass das Zwischenergebnis zumindest um eine Stelle nach links verschoben wird, wenn in einem Register links die höherwertigen Bits angeordnet sind und rechts die niederwertigen Bits.

An dieser Stelle sei ferner darauf hingewiesen, daß ein höchstwertiges Bit (MSB) ein Bit in einem Register ist, das eine Nutzinformation trägt. Ist eine Zahl beispielsweise kleiner als die Registerlänge es ermöglichen würde, und ist die Zahl im Register rechts ausgerichtet, so wird die Zahl ein höchstwertiges Bit haben, das irgendwo in dem Register plaziert ist. Oberhalb des MSB dieser Zahl stehen möglicherweise Nullen in dem Register, die jedoch keine signifikante Information tragen. Unter höchstwertigem Bit wird daher das Bit einer Zahl verstanden, das im Vergleich zu den anderen Bits der Zahl die höchste Ordnung hat und gleichzeitig eine Nutzinformation trägt.

Bei einem speziellen Ausführungsbeispiel ist die Einrichtung 104 zum Ermitteln des Zwischenergebnis-Verschiebungswerts $s_z$ ausgebildet, um das Zwischenergebnis so weit als möglich nach links zu schieben, derart, daß das MSB des verschobenen Zwischenergebnisses die gleiche Ordnung hat wie das MSB des Moduls. In diesem Fall wird eine Modulsubtraktion, also eine Reduktion, zu einem wesentlich verkleinerten neuen Zwischenergebnis nach einer Drei-Operanden-Addition führen. Daher wird dieser Fall angestrebt, da dann immer gut, schnell und effizient reduziert wird. Die Einrichtung 104 zum Ermitteln des Zwischenergebnis-Verschiebungswerts ist jedoch dann bereits wirksam, wenn sie einen Zwischenergebnis-Verschiebungswert $s_z$ größer als 0 produziert.

Die erfindungsgemäße Vorrichtung umfaßt ferner eine Einrichtung 106 zum Berechnen eines Multiplikanden-Verschiebungswerts $s_c$, der gleich der Differenz zwischen dem Zwischenergebnis-Verschiebungswert $s_z$ und dem Multiplikations-Look-Ahead-Verschiebungswert $s_m$ ist. Aus der im Block 106 von Fig. 1 stehenden Gleichung ist zu erkennen, daß bereits ein Zwischenergebnis-Verschiebungswert größer als 0 dazu führt, daß der Multiplikations-Verschiebungswert $s_m$ nicht mehr voll durchschlägt und die Schieber-Dimensionierung bestimmt, sondern daß der Multiplikations-Look-Ahead-Verschiebungswert $s_m$ im Falle eines $s_z$ größer als 0 bereits betragsmäßig reduziert ist.

Die in Fig. 1 gezeigte Vorrichtung umfaßt ferner eine Einrichtung 108 zum Verschieben des Zwischenergebnisses Z um den Zwischenergebnis-Verschiebungswert $s_z$, der von der Einrichtung 104 über einen Ausgang 110 sowohl der Einrichtung 106 als auch der Einrichtung 108 bereitgestellt wird. Die Einrichtung zum Verschieben ist ferner ausgebildet, um den Multiplikanden C um dem Multiplikanden-Verschiebungswert $s_c$ zu verschieben, um einen verschobenen Multiplikanden zu erhalten.

Die in Fig. 1 gezeigte Vorrichtung umfaßt darüber hinaus eine Einrichtung 112 zum Durchführen einer Drei-Operanden-Addition unter Verwendung des verschobenen Zwischenergebnisses, des verschobenen Multiplikanden und des Moduls, der feststehend ist, um ein Zwischenergebnis für den aktuellen Iterationsschritt zu erhalten, welches an einem Ausgang 114 der Drei-Operanden-Addiereinrichtung 112 ausgegeben wird.

An dieser Stelle sei darauf hingewiesen, daß die Verschiebungseinrichtung 108 und die Drei-Operanden-Additionseinrichtung 112 nicht unbedingt als getrennte Einrichtungen ausgeführt sein können, sondern daß die Verschiebung eines Operanden, also die Multiplikation des Operanden mit $2^s$ nicht unbedingt Hardware-mäßig, also durch tatsächliche Registerverschiebung ausgeführt zu werden braucht, sondern prinzipiell auch Software-mäßig durch Multiplikation mit $2^s$ erreicht werden kann. In diesem Fall werden die Einrichtungen 108 und 112 in eine einzige Einrichtung verschmolzen, die die Funktionalität der Multiplikation und anschließender Addition gemäß der in dem Block 112 in Fig. 1 dargelegten Gleichung ausführt.

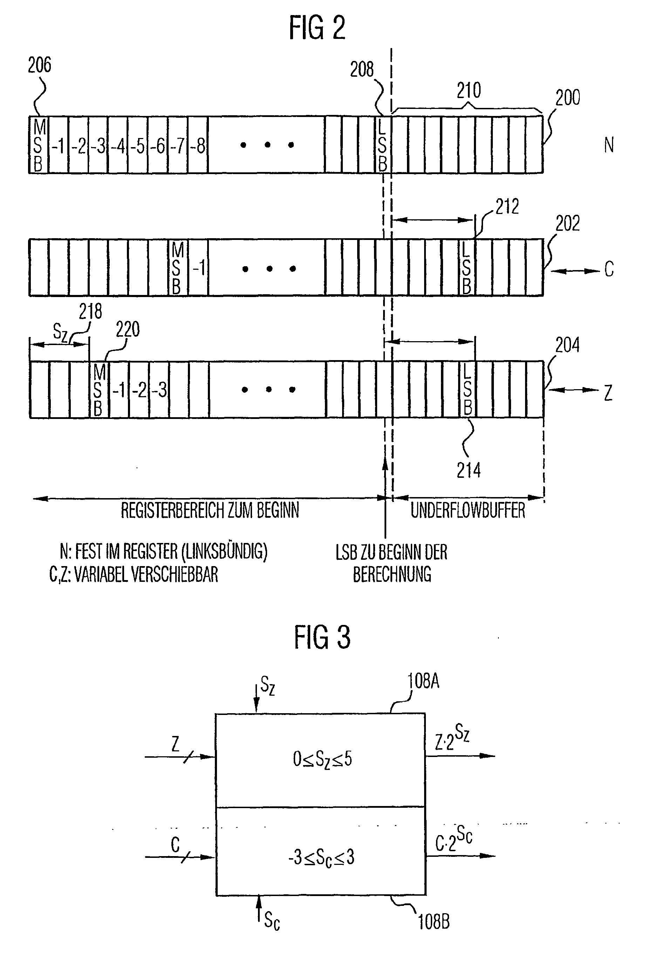

Fig. 2 zeigt eine schematische Darstellung der drei relevanten Register, nämlich des Modul-Registers N 200, das Multiplikanden-Registers C 202 und des Zwischenergebnis-Registers Z 204.

Bei einer Verschiebung des Multiplikanden im Multiplikanden-Register 202 wird der Modul N in dem Modulregister 200 fest eingetragen. Darüber hinaus wird es bevorzugt, den Modul N in das Modulregister 200 linksbündig einzutragen, so daß ein höchstwertiges Bit (MSB) in der höchstwertigen Registerstelle, die in Fig. 2 ganz links eingezeichnet ist und mit 206 bezeichnet ist, eingetragen wird. In den benachbarten Registerzellen folgen dann die Bits MSB -1, MSB -2, MSB -3 etc. des Moduls N, bis zu einem niederstwertigen Bit (LSB) 208 des Moduls. Der Modul N, der entweder der normale Modul ist, der beispielsweise bei einer RSA-Berechnung verwendet wird, oder der, wie es nachfolgend ausgeführt wird, bevorzugterweise ein transformierter Modul ist, steht in dem Modulregister 200 während der gesamten iterativen Berechnung fest. Dagegen sind der Multiplikand C und das Zwischenergebnis Z unter Verwendung der Verschiebungseinrichtung bzw. entsprechender Shifter variabel in ihren Registern 202, 204, wie es durch die Doppelpfeile neben den Registern angedeutet ist. Fig. 2 zeigt eine typische Situation in irgendeinem Iterationsschritt bei der Berechnung einer Multiplikation eines Multiplikators M und des Multiplikanden C bezüglich des Moduls N. Aus Fig. 2 ist ersichtlich, daß der Multiplikand C bereits um 5 Bits nach rechts, also in den Underflow-Buffer 210 hineingeschoben worden ist. Ferner ist zu sehen, daß gerade das Zwischenergebnis-Register derart belegt ist, daß das aktuelle Zwischenergebnis um 3 Bits nach oben geschoben werden könnte.

Bei dem in Fig. 2 gezeigten Ausführungsbeispiel wird der Modul N immer linksbündig im Modulregister 200 angeordnet. Je nach Bitlänge des Moduls N kommt das LSB 208 des Moduls N irgendwo im Modulregister zum Liegen. Die Bits 210 unterhalb des LSB 208 des Moduls N im Modulregister definieren dann den Underflow-Buffer, in den sich der Multiplikand C bewegen kann.

Im nachfolgenden wird das Konzept der Verschiebung des Multiplikanden C mit dem bekannten ZDN-Algorithmus, bei dem der Multiplikand C konstant war, verglichen. Während im alten ZDN-Verfahren in Analogie zu dem schrittweisen Multiplizieren von zwei binären Zahlen prinzipiell nach der Schulmathematik vorgegangen wird, bei der das Zwischenergebnis um den Multiplikations-Vorausschau-Verschiebungswert nach links geschoben worden ist, und der Modul dann ebenfalls nach oben verschoben worden ist, um eine effiziente Reduktion in jedem Iterationsschritt zu erreichen, wird beim erfindungsgemäßen Verfahren gewissermaßen das Komma hinsichtlich seiner Plazierung in dem Register mit bewegt. Dies geschieht dadurch, daß der Multiplikand C, der gewissermaßen das Komma definiert, verschoben wird.

Bei einem bevorzugten Ausführungsbeispiel mit Multiplikanden-Verschiebung wird der Wert Z im Zwischenergebnisregister 204 immer so hoch als möglich geschoben, damit eine Reduktion stattfindet. Bei dem in Fig. 2 gezeigten Fall würde für den nächsten Iterationsschritt ein Verschiebungswert $s_z$ 218 (3 Bits) gewählt werden, so daß das MSB 220 des aktuellen Z-Werts im Z-Register 204 in seiner Ordnung gleich dem MSB 206 des Moduls wird. Wird dann von dem Register Z der Modul N abgezogen, so wird die Differenz relativ klein sein, da die Zahlen etwa gleich groß sind. An dieser Stelle wird darauf hingewiesen, daß genau so gut mit positiven wie mit negativen Zahlen gerechnet werden kann.

In einem nächsten Schritt wird, wie es anhand von Fig. 1 dargestellt worden ist, eine Untersuchung von Stellen des Multiplikators M für den aktuellen Iterationsschritt durchgeführt, um herauszufinden, welcher Multiplikations-Vorausschau-Verschiebungswert $s_m$ zugelassen wird. Aus Fig. 1, Block 106 ist ersichtlich, daß dann aus $s_z - s_m$ der Verschiebungswert $s_c$ für das Multiplikanden-Register 202 ermittelt wird.

Wenn beispielhaft der Multiplikations-Vorausschau-Algorithmus ermittelt, daß der Multiplikations-Verschiebungswert $s_m$ 3 beträgt, also gleich $s_z$ 218 ist, so rechnet sich ein Multiplikanden-Verschiebungswert $s_c$ gleich 0. Wenn dieses Ergebnis mit dem bekannten ZDN-Algorithmus verglichen wird, so zeigt sich, daß in diesem Fall das $s_z$ so gewählt worden ist, wie es der Booth-Algorithmus erlaubt. Es muß also keine Komma-Verschiebung, also keine Verschiebung des Multiplikanden C stattfinden.

Nachfolgend wird der Fall betrachtet, bei dem $s_m$ kleiner als $s_z$ ist, also bei dem in Fig. 2 gezeigten Beispiel lediglich 2 beträgt, während $s_z$ 218 gleich 3 beträgt. Im Vergleich zu dem bekannten Booth-Algorithmus bedeutet dies, daß das Zwischenergebnis eigentlich um ein Bit zu weit nach oben verschoben worden ist. Z ist also für die Addition mit C um den Faktor 2, also eine Verschiebung um eine Registerstelle, zu groß. Um dies auszugleichen, wird nunmehr gemäß dem neuen Verfahren der Multiplikand C ebenfalls um ein Bit nach oben verschoben. In anderen Worten ausgedrückt bedeutet dies, daß das Komma, das durch C bzw. das LSB 212 von C definiert ist, an den gewählten Z-Verschiebungswert $s_z$ 218 angepaßt wird. Nach einer Verschiebung von C um ein Bit bzw. den Wert von $s_c$ nach oben sind die Verhältnisse zwischen C und Z wieder klar, und es kann eine fehlerfreie Addition im Block 112 von Fig. 1 stattfinden.

Darüber hinaus wird aufgrund der Tatsache, daß $s_z$ so groß als möglich gewählt worden ist, in der Drei-Operanden-Addition im Block 112 von Fig. 1 auch eine effiziente Reduktion stattfinden, da Z in etwa in der Größenordnung von N liegt, was bereits durch Verschiebung um $s_z$ 218 erreicht wird, und da sogar noch ein Multiplikand C hinzuaddiert worden ist, so daß die Zahlen N und Z auf jeden Fall in ähnlicher Größenordnung sind.

Nachfolgend wird der Fall betrachtet, bei dem $s_m$ größer als $s_z$ ist. Wie es ausgeführt worden ist, wird es bevorzugt, $s_z$ 218 maximal zu wählen. Ein größerer Wert von $s_z$ ist als drei Bits in Fig. 2 ist nicht möglich, da dann das MSB 220 von Z aus dem Register 204 "herausfallen" würde.

Bestimmt der Booth-Algorithmus nun ein $s_m$, das größer als $s_z$ ist, so wurde beim in Fig. 2 beschriebenen Iterationsverfahren der Zwischenergebnis-Wert um z. B. ein Bit zu wenig nach oben verschoben. Dies bedeutet, daß für die Drei-Operanden-Addition ohne Gegenmaßnahmen Z im Vergleich zu C zu klein ist. Um dieser Situation entgegen zu wirken, wird daher auch der Multiplikand C um z. B. ein Bit gemäß der Differenz zwischen $s_z$ und $s_m$ nach rechts geschoben, so daß die Verhältnisse zwischen C und Z wieder stimmen. Auch in diesem Fall findet wieder eine gute Reduktion statt, da Z aufgrund der Tatsache, daß es maximal nach oben geschoben worden ist, in der Größenordnung von N liegt, so daß die Differenz zwischen Z und N wieder eine relativ kleine Zahl ist, d. h. daß eine gute Reduktion innerhalb der Drei-Operanden-Addition im Block 112 von Fig. 1 stattgefunden hat.

Das in Fig. 2 dargestellte Konzept hat somit zwei wesentliche Vorteile hinsichtlich der Ausnutzung von existierenden Shifter-Ressourcen. Ein solcher Shifter zum Verschieben von Z und C, wie er in der Verschiebungseinrichtung 108 von Fig. 1 implementiert werden könnte, ist in Fig. 3 gezeigt. Der Shifter umfaßt schematisch einen ersten Shifterteil 108a zum Verschieben von Z und einen zweiten Shifterteil 108b zum Verschieben von C. Der erste Shifter-Teil 108a ist ein Shifter, der nur in positive Richtung shiften kann. Er wird zum Verschieben von Z verwendet. Daraus wird ersichtlich, daß das LSB 214 von Z niemals in den Underflow-Buffer 210 hineingeschoben werden kann. Fig. 2 zeigt jedoch den Fall nach einer Drei-Operanden-Addition, weshalb das LSB 212 von C und das LSB 214 von Z die gleiche Wertigkeit haben, da durch die Drei-Operanden-Addition das LSB 214 unabhängig davon, um wie viel Z vor dieser Drei-Operanden-Addition nach oben verschoben worden ist, durch das LSB aller beteiligten Operanden im Block 112 von Fig. 1 bestimmt wird. Nachdem N fest ist und C nach unten verschoben werden kann, bestimmt C immer das LSB von Z nach einer Drei-Operanden-Addition. Würde Z nunmehr, wie es beschrieben worden ist, um $s_z$ 218 nach links verschoben werden, so würden die LSBs 212 und 214 von C und Z vor der Drei-Operanden-Addition divergieren, um dann, nach der Drei-Operanden-Addition wieder zusammenzufallen. Nachdem $s_m$ immer positiv ist, da der Multiplikator ja nicht auf einmal in die entgegengesetzte Richtung, also von niederwertigen zu höherwertigen Bits verarbeitet wird, und nachdem $s_z$ immer positiv ist, ist der Betrag von $s_c$ immer kleiner als $s_z$, so daß das LSB von Z immer durch C bestimmt wird.

Der große Shifter 108a, der um +5 shiften kann, wird daher für $s_z$ eingesetzt, so daß durch diesen großen Shiftwert Z immer so nah als möglich an N herangeschoben wird. An dieser Stelle sei darauf hingewiesen, daß der in Fig. 2 gezeigte Fall nicht unbedingt der typische Fall ist. Es kann genau so gut sein, daß Z und N in einer vorherigen Drei-Operanden-Addition nahezu gleich groß waren, so daß das MSB 220 trotz einer maximalen Verschiebung nach links immer noch eine kleinere Wertigkeit hat als das MSB 206 des Moduls N. Um diesen Fall so selten als möglich zu machen, wird der große Schieber, der nur in einer Richtung schieben kann, also der Schieber 108a zum Verschieben von Z verwendet. Nachdem der Multiplikand C in beiden Richtungen verschoben werden muß, wird für diesen Multiplikanden ein Shifter mit einer Verschiebungsmöglichkeit nach oben, also nach links, und eine Verschiebungsmöglichkeit nach unten, also nach rechts benötigt. Nachdem $s_c$ jedoch immer eine Differenz von positiven Zahlen sein wird, muß der Schieber nicht so groß ausgelegt werden. Es hat sich daher herausgestellt, daß ein Schieber mit einer Schiebermöglichkeit von -3 bis +3 ausreichend ist. Vorhandene Schieberkapazitäten werden daher durch das neue Konzept mit variablem Multiplikand C effizienter ausgenutzt, da der Multiplikations-Verschiebungswert $s_m$ niemals direkt in eine Verschiebung umgesetzt werden muß (dieser Wert ist tendenziell groß), und da der große Schieber damit zu Reduktionszwecken verwendet werden kann, nämlich zum Verschieben von Z so nah als möglich an N, so daß eine gute Reduktion stattfindet.

Es hat sich herausgestellt, daß bei einer iterativen Ausführungsbeispiel des alten ZDN-Verfahrens und auch des neuen Verfahrens mit variablem Multiplikanden C die Reduktion gegenüber der Multiplikation immer etwas "hinterherhinkt".

Dies hat sich beim alten ZDN-Verfahren dadurch bemerkbar gemacht, daß nach Abarbeitung sämtlicher Stellen des Multiplikators M der im alten Verfahren verschobene Modul N immer noch größer als der ursprüngliche Modul war.

In anderen Worten ausgedrückt war im alten ZDN-Verfahren immer noch ein Teil des aktuellen Moduls im Overflow-Buffer. Es mußten daher noch einige wenige Rest-Operanden-Additionen durchgeführt werden, bei denen zwar keine Multiplikatorstellen mehr untersucht werden mußten, bei denen jedoch noch so viele Drei-Operanden-Additionen mit verschobenem Modul (nach rechts verschobenem Modul) durchgeführt werden mußten, bis das MSB des Moduls wieder aus dem Overflow-Buffer herausgewandert ist und an der gleichen Stelle im Register saß, das es zu Anfang der Berechnung, also vor dem ersten Iterationsschritt hatte. Der Multiplikations-Vorausschau-Algorithmus war daher typischerweise bereits einige Schritte vor dem Reduktions-Vorausschau-Algorithmus "fertig".

Bei dem neuen Verfahren tritt diese Situation ebenfalls auf. Sie wird jedoch nicht dadurch bemerkt, daß der Modul im Overflow-Buffer ist. Beim neuen Verfahren ist der Modul ja, wie es ausgeführt worden ist, fest und nicht verschiebbar. Wenn alle Multiplikatorstellen abgearbeitet sind, und wenn festgestellt wird, daß das LSB 212 noch niedriger ist als das LSB 208 des Moduls, so müssen ebenfalls noch einige weitere abschließende Operanden-Additionen durchgeführt werden, und zwar ohne Berücksichtigung von Multiplikatorstellen, da diese ja bereits abgearbeitet sind. Nachdem die Multiplikatorstellen bereits abgearbeitet sind, wird auch der Multiplikand C nicht mehr benötigt. Er muß daher, wenn alle Multiplikatorstellen abgearbeitet sind, nicht mehr auf die durch das LSB 208 definierte "Nullinie" geschoben werden. Sobald alle Multiplikatorstellen abgearbeitet sind, ist der Multiplikand C uninteressant. Das LSB 212 des Multiplikanden C muß daher dann, wenn alle Multiplikatorstellen abgearbeitet sind, nicht mehr unter Verwendung des kleinen Schiebers 108b, der in einem Schritt immer nur einen Verschiebungswert um 3 nach links gestatten würde, nach oben verschoben werden. Statt dessen ist der Multiplikand in dem Moment, in dem alle Multiplikatorstellen abgearbeitet sind, uninteressant und wird nicht mehr benötigt.

Für die abschließende Reduktion ist es jedoch interessant, wo das LSB 214 des Zwischenergebnis-Registers Z im Underflow-Buffer 210 stand. So bestimmte das LSB 212 des Multiplikanden C bei der letzten Drei-Operanden-Addition, bei der noch Multiplikatorstellen vorhanden waren, die Ordnung des LSB 214 des Zwischenergebnis-Registers Z. Eine abschließende Reduktion wird noch so lange stattfinden, bis das LSB 214 auf der durch das LSB 208 des Modulregisters 200 definierten "Nullinie" steht. Diese "Hochschieben" des Z-Werts im Zwischenergebnisregister 204 findet nun jedoch mit dem großen Schieber 108a statt, der immer bei dem in Fig. 3 gezeigten Ausführungsbeispiel fünf Verschiebungswerte gestattet. Die abschließende Reduktion findet daher mit großen Schritten statt, während diese bei dem bekannten Verfahren mit dem kleinen Shifter bewältigt werden mußte, da es dort erforderlich war, daß der Modul N wieder auf seine ursprüngliche Position zurückgefahren wird. Beim neuen Verfahren ist der Modul N hingegen fest, während das Komma durch den Multiplikanden C bewältigt wird, der jedoch für die abschließende Reduktion uninteressant ist, da keine Multiplikatorstellen mehr vorhanden sind. Damit ist der Multiplikations-Vorausschau-Parameter $v_c$ ohnehin gleich 0, so daß zum Hochschieben von Z in der "degenerierten" abschließenden Operanden-Additionen immer der große Schieber Z, der eine Verschiebung bis zu 5 erlaubt, eingesetzt werden kann.

Zusammenfassend ausgedrückt liefert die in Fig. 3 gezeigte beispielhafte Verschiebungseinrichtung bei einem 5-Shifter für Z und einem -3, ...., +3-Shifter für C einen virtuellen Booth-Shifter der Länge 8 (!) und einen Reduktions-Shifter der Länge 5.

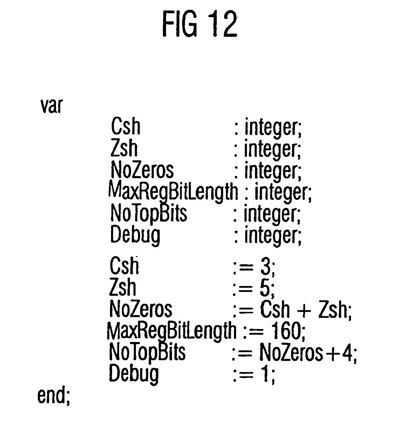

Bezüglich einer detaillierten Beschreibung des neuen iterativen Multiplikationskonzepts wird später auf die Fig. 12 bis 17b Bezug genommen, die eine bevorzugte Ausführungsform der vorliegenden Erfindung in einem parallel erläuterten PseudoCode darstellen, wobei in diesem dargestellten Ausführungsbeispiel das neue Verfahren mit Verschiebung des Multiplikanden C mit dem Konzept der Modultransformation und einem neuartigen Verfahren zum parallelen Berechnen der Multiplikations-Vorausschau-Parameter und der Reduktions-Vorausschau-Parameter kombiniert ist.

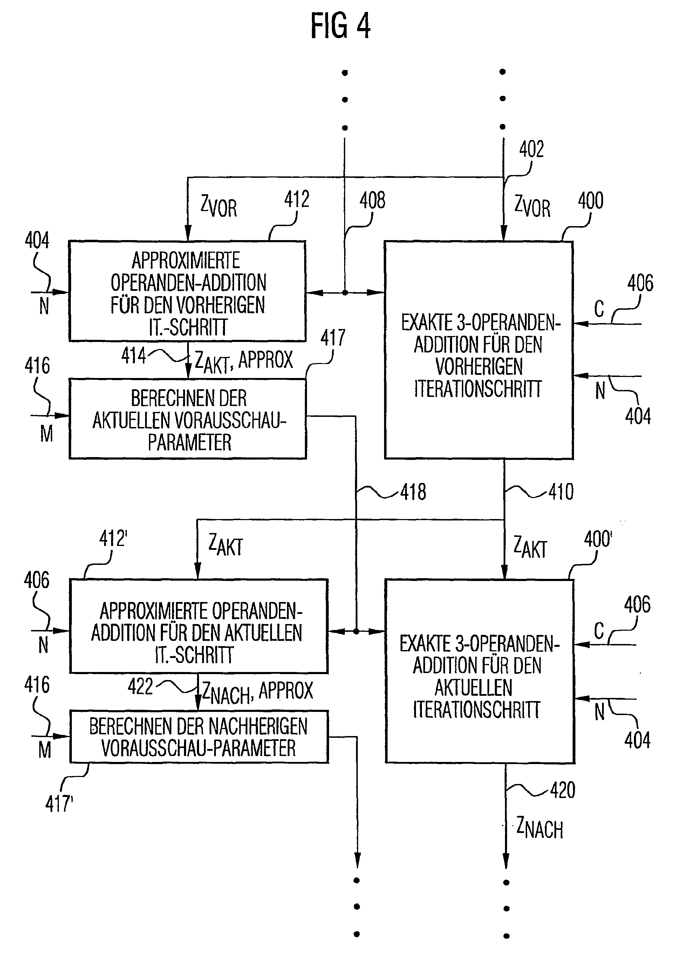

Fig. 4 zeigt ein Blockschaltbild einer Vorrichtung zum Berechnen einer Multiplikation eines Multiplikanden und eines Multiplikators bezüglich eines Moduls mittels eines Iterationsverfahrens mit mehreren Iterationsschritten, die einen vorherigen Iterationsschritt und einen aktuellen Iterationsschritt umfassen. Die in Fig. 4 gezeigte Vorrichtung kann sowohl dazu verwendet werden, die Berechnung der Vorausschau-Parameter $s_m$, $s_c$ und $s_z$ des in Fig. 1 beschriebenen neuen Verfahrens mit verschiebbarem Multiplikanden C zu beschleunigen, als auch dazu verwendet werden, die Vorausschau-Parameter $s_z$ und $s_n$ der Blöcke 920 und 940 aus Fig. 18, also die Vorausschau-Parameter des bekannten ZDN-Verfahrens zu berechnen.

An dieser Stelle sei darauf hingewiesen, daß je nach Situation Vorausschau-Parameter einerseits die Verschiebungswerte sind, jedoch andererseits auch die Vorzeichen für den Multiplikanden und den Modul sind, die je nach Look-Ahead-Regel und je nach Situation der Verschiebungswerte im Hinblick auf die verfügbaren Shifter und die Größe des verfügbaren Underflow-Buffers bestimmt sind und +, - oder 0 sein können, wie es später noch dargelegt werden wird.

Die in Fig. 4 gezeigte Vorrichtung zum beschleunigten Ausführen des Iterationsverfahrens umfaßt eine Einrichtung 400 zum Durchführen einer exakten Drei-Operanden-Addition für den vorherigen Iterationsschritt unter Verwendung eines vorherigen Zwischenergebnisses $Z_{vor}$ 402, des Moduls N 404, des Multiplikanden Z 406 und von vorherigen Vorausschau-Parametern, die in der schematischen Darstellung von Fig. 4 über eine Leitung 408 bereitgestellt werden. Die Einrichtung 400 zum Berechnen der exakten Drei-Operanden-Addition liefert ein exaktes Zwischenergebnis für den aktuellen Iterationsschritt $Z_{akt}$, das in Fig. 4 mit 410 bezeichnet ist. Die in Fig. 4 gezeigte Vorrichtung umfaßt ferner eine Einrichtung 412 zum Durchführen einer approximierten Operanden-Addition für den vorherigen Iterationsschritt unter Verwendung des vorherigen Zwischenergebnisses $Z_{vor}$ und des Moduls N 404 sowie unter Verwendung von zumindest einem Teil der vorherigen Vorausschau-Parameter, die in Fig. 4 durch die Leitung 408 bereitgestellt werden, um ein approximiertes Zwischenergebnis für den aktuellen Iterationsschritt zu erhalten, das in Fig. 4 mit $Z_{akt, approx}$ bezeichnet wird. Unter Verwendung des approximierten Zwischenergebnisses 414 für den aktuellen Iterationsschritt, das zwar nicht dem exakten Zwischenergebnis $Z_{akt}$ 410 entspricht, jedoch eine Abschätzung bzw. Prädiktion desselben darstellt, und unter Verwendung des Multiplikators M 416 werden dann die aktuellen Vorausschau-Parameter berechnet und über eine Leitung 418 ausgegeben. Die Einrichtung 417 zum Berechnen der aktuellen Vorausschau-Parameter verwendet also, wie es ausgeführt worden ist, das aktuelle approximierte Zwischenergebnis 414 sowie den Multiplikator 416, um die aktuellen Vorausschau-Parameter 418 zu berechnen.

Die in Fig. 4 gezeigte Vorrichtung ist ferner wirksam, damit die Einrichtung zum Durchführen des exakten Drei-Operanden-Addition ausgebildet ist, um eine exakte Drei-Operanden-Addition in dem aktuellen Iterationsschritt unter Verwendung des exakten Zwischenergebnisses 410 für den aktuellen Iterationsschritt, unter Verwendung des Moduls N 404, des Multiplikanden 406 sowie der aktuellen Vorausschau-Parameter, die über die Leitung 418 von der Einrichtung 417 bereitgestellt werden, durchzuführen.

Dieser Sachverhalt ist in Fig. 4 schematisch dahingehend dargestellt, daß eine Einrichtung 400' zum Berechnen der exakten Drei-Operanden-Addition für den aktuellen Iterationsschritt dargestellt ist, daß eine Einrichtung 412' zum Berechnen der approximierten Operanden-Addition für den aktuellen Iterationsschritt dargestellt ist, und daß eine Einrichtung 417' zum Berechnen der nachherigen Vorausschau-Parameter dargestellt ist. Im einzelnen ist die Einrichtung 412' ausgebildet, um unter Verwendung des aktuellen Zwischenergebnisses 410 und des Moduls N eine approximierte Operanden-Addition durchzuführen, um das Zwischenergebnis Z für den nachherigen Schritt, das von der Einrichtung 400' exakt ausgerechnet wird und mit 420 bezeichnet ist, als $Z_{nach,approx}$ 422 abzuschätzen. Unter Verwendung des Werts 422 werden dann die nachherigen Vorausschau-Parameter zumindest unter Berücksichtigung des Multiplikators M 416 berechnet. Es sei darauf hingewiesen, daß es natürlich bevorzugt wird, für jeden Iterationsschritt nicht eine eigene Einrichtung zum Berechnen der exakten Drei-Operanden-Addition, eine eigene Einrichtung zur Berechnung der approximierten Operanden-Addition oder eine eigene Einrichtung zum Berechnen der aktuellen Vorausschau-Parameter bereitzustellen, sondern daß ein Kryptographieprozessor eine einzige Einrichtung 400 zum Berechnen der exakten Drei-Operanden-Addition, eine einzige Einrichtung zum Berechnen der approximierten Operanden-Addition sowie eine einzige Einrichtung zum Berechnen der Vorausschau-Parameter auf der Basis eines approximierten Zwischenergebnisses aufweist. In diesem Fall ist eine Steuerungseinrichtung vorgesehen, die bewirkt, daß die drei Einrichtung für jeden Iterationsschritt mit neuen entsprechenden Eingangsparametern gespeist werden, wie es aus Fig. 4 ersichtlich ist.

Die Einrichtung 417 (bzw. 417') ist ausgebildet, um die Funktionalitäten der Einrichtungen 100, 104, 106 von Fig. 1 für das neue Verfahren mit verschiebbarem Multiplikanden C aufzuweisen.

Im Hinblick auf das alte Verfahren ist die Einrichtung 417 bzw. 417' ausgebildet, um die Funktionalitäten der Einrichtungen 910, 930 aufzuweisen, die, wie es aus Fig. 18 ersichtlich ist, ebenfalls statt mit dem exakten Zwischenergebnis des vorherigen Schritts auch mit einem approximierten Zwischenergebnis des vorherigen Schritts gespeist werden können.

Wie es bereits durch die in Fig. 4 gezeigte schematische Darstellung deutlich wird, ermöglicht die Approximation des in der exakten Drei-Operanden-Addition berechneten exakten Zwischenergebnisses die Berechnung der exakten Drei-Operanden-Addition in einem Iterationsschritt und parallel dazu die Berechnung der Vorausschau-Parameter für den nächsten Iterationsschritt, so daß gewissermaßen durchgehend, ohne Pause zur Berechnung von Vorausschau-Parametern Drei-Operanden-Additionen durchgeführt werden können.

Wenn Fig. 18 betrachtet wird, so ist zu sehen, daß bei dem alten Konzept, bei dem keine Approximation eines exakten Zwischenergebnisses durchgeführt worden ist, jede Iterationsschleife grundsätzlich aus zwei seriellen Stufen bestand, nämlich zunächst der Berechnung der Vorausschau-Parameter für den aktuellen Iterationsschritt (910, 930) und dann die Berechnung der Drei-Operanden-Addition samt entsprechender Verschiebungen (920, 940, 950).

Genauso könnte auch das neue Konzept mit Verschiebung des Multiplikanden C ausgeführt werden, indem in einem Iterationsschritt zunächst die Blöcke 100, 104, 106 wirksam sind, um $s_c$ und $s_z$ für den aktuellen Iterationsschritt auszuführen, und um dann, wenn die Vorausschau-Parameter berechnet worden sind, entsprechende Verschiebungen mit der Einrichtung 108 und eine Drei-Operanden-Addition mit der Einrichtung 112 vorzunehmen.

Dieses Zwei-Takt-Verhalten, das erhebliche Leistungseinbußen mit sich brachte, wird durch das in Fig. 4 gezeigte Beschleunigungskonzept überwunden, indem parallel zueinander ein exaktes Zwischenergebnis für den aktuellen Iterationsschritt berechnet wird und bereits in dem aktuellen Iterationsschritt unter Verwendung eines approximierten Zwischenergebnisses die Vorausschau-Parameter für den nächsten Iterationsschritt berechnet werden.

Durch das in Fig. 4 gezeigte Beschleunigungskonzept wird daher ein Problem des alten ZDN-Verfahrens von Fig. 18 und des neuen Iterationsverfahrens mit verschiebbarem Multiplikanden C von Fig. 1 überwunden, das darin bestand, daß die Shift- und Vorzeichen-Parameter $s_z$, $s_n$, a und b von Fig. 18 bzw. $s_c$ und $s_z$ sowie $v_c$ und $v_n$ des neuen Verfahrens von Fig. 1 zunächst berechnet werden mußten, also vor einer jeweiligen Drei-Operanden-Addition. Während der Berechnung des Shift- und Vorzeichen-Parameter wäre somit das Addierwerk 950 beim alten Verfahren von Fig.

18 oder das Addierwerk 112 beim neuen Verfahren von Fig. 1 unbeschäftigt gewesen.

Bei dem Beschleunigungskonzept von Fig. 4 wird dies dadurch gelöst, daß eine gute und sehr schnelle Abschätzung der gegenwärtig laufenden Drei-Operanden-Addition durchgeführt wird. Mit diesem approximierten vorzeitig vorliegenden Wert können daher in der verbleibenden Zeit die Vorausschau-Parameter für den nächsten Iterationsschritt berechnet werden. Diese stehen dann bereit, wenn die nächste Drei-Operanden-Addition beginnt. Dadurch erreicht man eine Beschleunigung des Verfahrens um bis zu einem Faktor 2.

Erfindungsgemäß wurde herausgefunden, daß die zukünftigen Shift- und Vorzeichenwerte im wesentlichen nur von den obersten z. B. 12 Bits von Z abhängen, wobei bei dem in Fig. 1 gezeigten neuen Konzept der Multiplikanden-Verschiebungswert $s_c$ vom Multiplikator M, d. h. $s_m$, und von $s_z$ abhängt.

Ferner basiert die Approximation darauf, daß die obersten Bits von Z im wesentlichen nicht von C abhängen. Dies liegt daran, daß, wie es bereits ausgeführt worden ist, die Reduktion der Multiplikation immer etwas nachhängt. Dies hat, wenn die Zahlen Z, N und C betrachtet werden, zur Folge, daß Z im Vergleich zu C immer dann, wenn die Reduktion nachhängt, groß ist. Es wird daher bevorzugt, für die approximierte Drei-Operanden-Addition im Block 412 C zu ignorieren, so daß aus der approximierten Drei-Operanden-Addition tatsächlich eine Zwei-Operanden-Addition wird, die ferner im Hinblick auf die vorstehenden Ausführungen zu der Bedeutsamkeit der oberen Bits lediglich mit einer Anzahl von oberen Bits, die kleiner als die Gesamtanzahl von Bits ist, wie z. B. mit den oberen 12 Bits von Z und N, unter Vernachlässigung von C durchgeführt wird.

Zur weiteren Beschleunigung der approximierten Drei-Operanden-Addition bzw. allgemein gesagt der approximierten Operanden-Addition im Block 412 wird nicht der ursprüngliche Modul als Modul N 404 verwendet, sondern ein transformierter Modul, der gemäß dem in der DE 10111987 A1 beschriebenen Prinzip der Modultransformation derart transformiert worden ist, daß eine bestimmte Anzahl von oberen Bits, die je nach Modultransformation zwischen 1 und einem beliebigen Wert variiert, unabhängig von einem tatsächlich verarbeiteten Modul immer gleich ist. Da bei der bevorzugten approximierten Operanden-Addition ohnehin nur eine bestimmte Anzahl von Bits ausgehend vom MSB des Modulregisters genommen wird und eine bestimmte Anzahl entsprechender Bits aus dem Zwischenergebnisregister Z genommen wird, muß für die approximierte Drei-Operanden-Addition real nichts aus dem Modulregister entnommen werden, da die oberen Bits im Modulregister ohnehin bekannt sind. Die einzige variable Größe zur Berechnung der approximierten Operanden-Addition ist daher das Vorzeichen $v_n$ des Moduls sowie die z. B. oberen 12 Bits des Zwischenergebnisregisters Z. Damit kann die approximierte Operanden-Addition vorzugsweise fest verdrahtet kombinatorisch ausgeführt werden, derart, daß sie sehr viel schneller vonstatten geht als die exakte Drei-Operanden-Addition, so daß während der Ausführung der exakten Drei-Operanden-Addition noch genügend Zeit verbleibt, um auf der Basis eines approximierten Zwischenergebnisses $Z_{approx}$ die Vorausschau-Parameter für den nächsten Schritt zu berechnen.

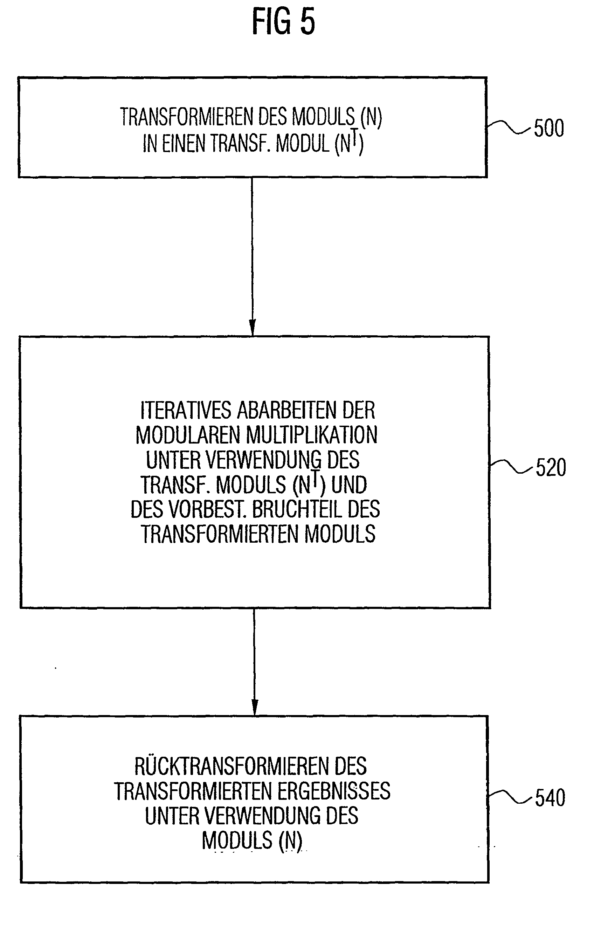

Bevor detailliert auf eine spezielle Ausführung der Einrichtung 412 zum Durchführen der approximierten Operanden-Addition eingegangen wird, wird nachfolgend anhand der Fig. 5 bis 10 auf die Funktionsweise der Modultransformation eingegangen, wie sie in der DE 10111987 A1 offenbart ist.

Fig. 5 zeigt ein Ablaufdiagramm eines Verfahrens zum modularen Multiplizieren eines Multiplikanden C mit einem Multiplikator M unter Verwendung eines Moduls N. Zunächst wird in einem Schritt 500 der Modul N in einen transformierten Modul $N^T$ gemäß folgender Gleichung transformiert:

$$N^T = T \times N.$$

In einem Schritt 520 wird dann die modulare Multiplikation unter Verwendung des transformierten Moduls $N^T$ und des vorbestimmten Bruchteils des transformierten Moduls, der beim bevorzugten Ausführungsbeispiel 2/3 beträgt, abgearbeitet. Bezogen auf die modulare Exponentiation bedeutet dies, daß eine RSA-Gleichung folgender Form berechnet wird:

$$C^T := M^d \bmod N^T.$$

Es wird also das Ergebnis der modularen Exponentiation C nicht in der durch den Modul N definierten Restklasse sondern in der durch den transformierten Modul $N^T$ definierten Restklasse berechnet, weshalb auf der linken Seite der obigen Gleichung nicht C sondern $C^T$ steht. Durch die Verwendung des transformierten Moduls $N^T$ ist hierbei die Berechnung des Hilfs-Reduktions-Verschiebungswerts $s_i$, die der Iterationsschleife von Fig. 19 des bekannten Reduktions-Vorausschau-Verfahrens entspricht, stark vereinfacht ist.

In einem abschließenden Schritt 540 wird dann wieder eine Rück-Transformation von $N^T$ zu N durchgeführt, indem eine Operation ausgeführt wird, die folgender Gleichung entspricht:

$$C: = C^T \bmod N.$$

Das transformierte Ergebnis $C^T$, das in der Restklasse des transformierten Moduls $N^T$ liegt, wird dabei vorzugsweise durch eine einfache Verschiebungs/Subtraktions-Reduktion in die Restklasse des Moduls N zurückgeführt, so daß C das Ergebnis der modularen Exponentiation ist.

Die Transformation des Moduls N in einen transformierten Modul $N^T$ unter Verwendung des Transformators T aus Schritt 500 wird so durchgeführt, daß der vorbestimmte Bruchteil des transformierten Moduls, also beim bevorzugten Ausführungsbeispiel das 2/3-fache des transformierten Moduls, eine höherwertige Stelle mit einem ersten vorbestimmten Wert hat, der zumindest eine niederwertige Stelle folgt, die einen zweiten vorbestimmten Wert hat. Damit kann der Vergleich des Zwischenergebnisses Z mit dem 2/3-fachen des transformierten Moduls stark vereinfacht werden, nämlich indem die oberste Stelle von Z, die ebenfalls den ersten vorbestimmten Wert hat, gesucht wird, und die Differenz zwischen der höherwertigen Stelle mit ersten vorbestimmten Wert des vorbestimmten Bruchteils des transformierten Moduls und der obersten Stelle des Zwischenergebnisses Z mit dem ersten vorbestimmten Wert gleich der Differenz $s_i$ ist.

Zusammengefaßt stellt sich dies folgendermaßen dar. N wird vorzugsweise in der 32-Bit-CPU und nicht im KryptoCoprozessor in einen transformierten Modul $N^T$ transformiert, so daß gilt:

$$N^T: = T \times N,$$

wobei T eine natürliche Zahl ist.

Für $N^T$ ergibt sich folgende Gestalt, wenn sämtliche verwendeten Zahlen Binärzahlen sind:

$$N^T = 1100...\ 0\ XX...XX$$

Für das 2/3-fache des transformierten Moduls ergibt sich dann folgender Wert:

$$2/3\ N^T = 100...\ 0\ X'X'...X'X'$$

Aus $N^T$ und 2/3 $N^T$ ist zu sehen, daß beide eine erste Portion von beispielsweise 16 Bits haben, und dann eine Portion von L(N) Bits X bzw. X'. Für den sogenannten ZDN-Vergleich werden nur die obersten 16 Bits des 2/3-fachen des transformierten Moduls $N^T$ herangezogen, da sich dann bereits eine Fehlerwahrscheinlichkeit von besser als etwa $2^{-10}$ ergibt. Es müssen also nicht alle 512, 1024 oder 2048 Bits des 2/3-fachen des transformierten Moduls zum ZDN-Vergleich herangezogen werden, sondern es genügt, wenn dieser Vergleich mit den obersten 16 Bits des transformierten Moduls durchgeführt wird. Selbstverständlich könnten auch noch weniger Bits von 2/3 $N^T$ zum Vergleich herangezogen werden, dann steigt jedoch die Fehlerwahrscheinlichkeit nach und nach an. Da die Fehler jedoch unkritisch sind und nur zu einem suboptimalen Verhalten des Reduktions-Vorausschau-Verfahrens führen, ist dieser Weg ohne weiteres gangbar.

Das 2/3-fache des transformierten Moduls $N^T$ hat somit eine höherwertige Stelle mit dem Wert 1, der zumindest eine niederwertige Stelle folgt, die einen Wert 0 hat, also einen zweiten vorbestimmten Wert. Bei dem vorstehend beschriebenen Ausführungsbeispiel ist die Anzahl der niederwertigen Stellen 15. Selbstverständlich können auch hier größere oder kleinere Anzahlen genommen werden, je nach dem, welche Größenunterschiede zwischen dem Zwischenergebnis Z und dem 2/3-fachen des transformierten Moduls $N^T$ zu erwarten sind bzw. bearbeitet werden sollen. Für den Betrag des Zwischenergebnisses Z der modularen Multiplikation, also des Ergebnisses der Drei-Operanden-Addition im Block 950 von Fig. 18 ergibt sich folgende Gestalt:

$$|Z| = 00...01YY...Y$$

Der Hilfs-Verschiebungswert $s_i$ wird gemäß folgender Gleichung berechnet:

$$2/3 \ N^T \ x \ 2^{-si} < |Z| \leq 4/3 \ N^T \ x \ 2^{-si}.$$

Aufgrund der Topologie des 2/3-fachen des transformierten Moduls $N^T$ ist der Wert $s_i$ immer der Abstand zwischen dem höchstwertigen Bit mit einer 1 des 2/3-fachen des transformierten Moduls $N^T$ und der höchstwertigen 1 des Betrags des Zwischenergebnisses.

Diese Stellendifferenz bzw. der Wert $s_i$ kann trivial ermittelt werden. Keine Iteration ist mehr erforderlich.

Darüber hinaus ist kein ZDN-Register mehr erforderlich, um das 2/3-fache des Moduls zu speichern, da per Definition zumindest die oberen beispielsweise 16 Bit des 2/3-fachen des transformierten Moduls $N^T$ immer die gleiche Gestalt haben. Kein Bit-Komparator ist mehr erforderlich. Die Wertigkeitsdifferenz der höchstwertigen Stelle des 2/3-fachen des transformierten Moduls $N^T$ mit einer "1" und der höchstwertigen Stelle von Z mit einer "1" kann ohne weiteres beispielsweise durch eine bitweise XOR-Verknüpfung des Registers für den transformierten Modul und des Registers für das Zwischenergebnis Z durchgeführt werden. $s_i$ ist dann gleich der Differenz der Wertigkeit der Stelle, wo die XOR-Verknüpfung eine erste "1" ausgibt, und wo die XOR-Verknüpfung eine zweite "1" ausgibt.

Aufgrund der Tatsache, daß kein ZDN-Register und kein ZDN-Komparator erforderlich sind, ist das gesamte Rechenwerk auf einer kleineren Chipfläche unterzubringen.

Außerdem hat der Krypto-Control-Part, also die Steuerlogik für den ZDN-Vergleich (760 in Fig. 10), eine kleinere Komplexität, da die aufwendige Iterationsschleife von Fig. 19 nicht ausgeführt werden muß. Schließlich geht die Berechnung schneller, so daß sich durch die Berechnung des Hilfs-Verschiebungswerts $s_i$ keine Timing-Probleme mehr für den gesamten Algorithmus ergeben.

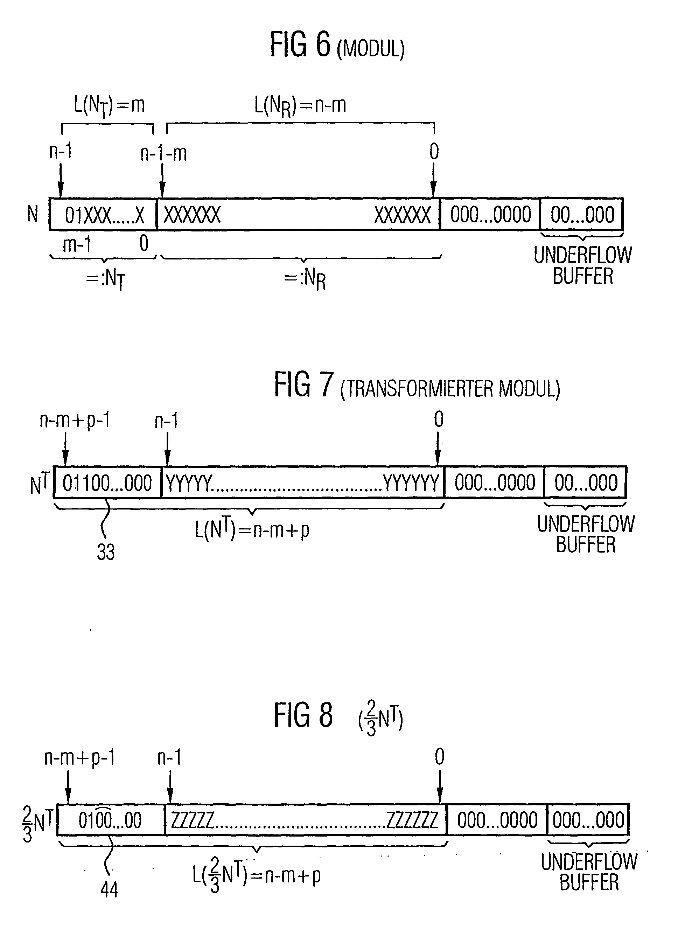

Im nachfolgenden wird anhand der Figuren 6 bis 9 auf die bevorzugte Transformation genauer eingegangen.

Wie es bereits ausgeführt worden ist, besteht ein wesentlicher Teil des ZDN-Algorithmus darin, daß folgende Gleichung erfüllt ist

$$2/3 \ 2^{-si} \ N < |Z| \leq 4/3 \ 2^{-si} \ N.$$

$s_i$ wird als Hilfs-Verschiebungswert bezeichnet und ist der Verschiebungswert, der notwendig ist, um Z stellenmäßig zu derselben Position wie N zu schieben. Im Stand der Technik waren zur Berechnung von $s_i$ Vergleichsoperationen von |Z| mit 2/3 N notwendig.

Der Vergleich mit 2/3 wird vereinfacht, indem der Modul in den transformierten Modul $N^T$ transformiert wird, wobei der transformierte Modul $N^T$ größer als N ist, bevor irgendeine modulare Operation mit N ausgeführt wird. Dann werden alle Berechnungen Modulo $N^T$ durchgeführt. Nachdem das Ergebnis der Berechnung jedoch in der Restklasse N sein muß, wird noch eine abschließende Reduktion mit N durchgeführt.

Wie es in Fig. 6 gezeigt ist, sei N eine Ganzzahl mit einer Länge von N Bits. Da der Modul N immer eine positive Ganzzahl ist, d. h. MSB = 0 in der Zweier-Komplement-Darstellung, ist das Vorzeichenbit gleich 0 und das zweithöchstwertige Bit (MSB -1) des Moduls N ist immer gleich 1. Für den ZDN-Vergleich ist es nicht erforderlich, sämtliche Bits des Moduls mit sämtlichen Bits des Zwischenergebnisses zu vergleichen, sondern es ist ausreichend, eine Anzahl von m Bits für den ZDN-Vergleich zu verwenden. Die höchstwertigen m Bits des Moduls N definieren einen ersten Teil des Moduls $N_T$, während die restlichen N-m Bits des Moduls einen zweiten Teil $N_R$ des Moduls definieren. Bei einem bevorzugten Ausführungsbeispiel ist m gleich 16. Selbstverständlich sind auch größere oder kleinere Werte von m möglich.

Wie es in Fig. 7 gezeigt ist, wird die Transformation derart ausgeführt, daß der transformierte Modul $N^T$ 16 Bit länger ist als der ursprüngliche Modul von Fig. 6.

Für den ZDN-Vergleich ist es ausreichend, die ersten 16 Bit von $N^T$ zu verwenden, wobei z. B. nur 12 Bits zum Vergleich verwendet werden, während die niederstwertigen 4 Bits einen Puffer für mögliche Überträge darstellen, die von noch niederwertigeren Bits kommen können.

In diesem Fall ist die Wahrscheinlichkeit, daß der Vergleich ein falsches Ergebnis ergibt, kleiner als $2^{-12}$. Falls der Vergleich ein falsches Ergebnis liefert, wird nur ein suboptimaler Reduktions-Verschiebungswert $s_N$ erzeugt, das Ergebnis Modulo N ist jedoch nach wie vor korrekt.

Wenn der Modul wie in Fig. 6 in der Zweierkomplementdarstellung verwendet wird, dann kann der Modul N folgendermaßen zerlegt werden:

$$N = 2^{n-m} N_T + N_R.$$

Nun wird N zu $N^T$ unter Verwendung des Transformators T transformiert, wobei T eine geeignet gewählte Ganzzahl ist, was aus Kongruenzgründen der Fall sein muß. $N^T$ sollte die in Fig. 7 gezeigte Form haben, d. h. das höchstwertige Bit (MSB) von $N^T$ muß gleich 0 sein, da $N^T$ eine positive Ganzzahl sein soll. Wie es nachfolgend ausgeführt wird, müssen das zweithöchstwertige und das dritthöchstwertige Bit des transformierten Moduls gleich 1 sein, während sämtliche anderen Bits des obersten Abschnitts des transformierten Moduls $N^T$, welcher in Fig. 7 mit dem Bezugszeichen 33 bezeichnet ist, einen Wert von "0" haben sollten. Nur in diesem Fall ergibt sich nämlich für das 2/3-fache von $N^T$, daß der oberste Abschnitt des 2/3-fachen von $N^T$, wie es in Fig. 8 gezeigt ist, lediglich ein Bit mit einer "1" hat, während alle anderen Bits in diesem obersten Abschnitt 44 gleich "0" sind, so daß der bereits beschriebene triviale Vergleich zur Bestimmung von $s_i$ ausgeführt werden kann.

Zunächst wird jedoch anhand von Fig. 7 auf die Berechnung des transformierten Moduls $N^T$ unter Verwendung des Transformators T eingegangen. Es gelte folgende Definition:

$$N^T = T\ N$$

$$= T(2^{n-m}\ N_T + N_R)$$

Für den Transformator T gilt folgendes:

$$T = \left\lfloor \frac{2^{p-2} + 2^{p-3}}{N_T} \right\rfloor$$

Unter Verwendung der Gleichung ergibt sich für den transformierten Modul $N^T$ folgendes:

$$N^T = \left\lfloor \frac{2^{p-2} + 2^{p-3}}{N_T} \right\rfloor (2^{n-m}N_T + N_R)$$

$$N^T = (2^{n+p-m-2} + 2^{n+p-m-3})\frac{N_T}{N_T} + (2^{p-2}+2^{p-3})\frac{N_R}{N_T}.$$

Wenn beispielsweise typische Werte für p und m genommen werden, also p gleich 32 Bit und m gleich 16 Bit, so ergibt sich für $N^T$ folgendes:

$$N^T = 2^{n+14} + 2^{n+13} + N_R \cdot \frac{2^{P-2}+2^{P-3}}{N_T}.$$

Es sei darauf hingewiesen, daß die Berechnung von $N^T$ vorzugsweise in der Host-CPU durchgeführt wird, und nicht im KryptoCoprozessor. Die Host-CPU umfaßt ein Kurzzahl-Rechenwerk, was jedoch für die Berechnung von $N^T$ ausreichend ist. Da T eine Ganzzahl sein muß und die Berechnungen innerhalb des Krypto-Coprozessors Modulo $N^T$ anstatt Modulo N durchgeführt werden, wobei $N^T$ größer als N ist, sind nur die ersten p-m gleich 16 Bits von $N^T$ für den trivialen ZDN-Vergleich, um den Hilfs-Verschiebungswert $s_i$ zu berechnen, relevant. Die anderen n Bits von $N^T$ können irgendeine Zahl sein, sie sind für die Berechnung des Hilfs-Verschiebungswerts $s_i$, also für den Vergleich mit Z nicht relevant. Selbstverständlich werden jedoch alle Bits des transformierten Moduls $N^T$ für die Drei-Operanden-Addition benötigt, die nunmehr statt unter Verwendung des verschobenen Moduls unter Verwendung des verschobenen transformierten Moduls ausgeführt wird.

Für die gewählten Werte für m und p ist der Transformator T eine 16-Bit-Ganzzahl. Daher muß die Division, die zur Berechnung von T erforderlich ist, bzw. die zur Berechnung von $N^T$ erforderlich ist, nur für die höchstwertigen 32 Bits durchgeführt werden, und kann daher schnell und einfach auf der Host-CPU programmiert werden.

In Fig. 8 ist das 2/3-fache des transformierten Moduls $N^T$ gezeigt. Da das MSB-1 und das MSB-2 von $N^T$ gleich "1" sind, wie es in Fig. 7 gezeigt ist, und folgendes gilt:

$$(11)_2 = (3)_{10} \text{ und } (2/3 \times 3)_2 = (2)_{10} = (10)_2,$$

ergibt sich ein einfaches Bitmuster für das 2/3-fache des transformierten Moduls $N^T$, wobei die Länge des 2/3-fachen des transformierten Moduls $N^T$ gleich n-m+p ist.

Aufgrund der speziellen Gestalt von 2/3 $N^T$ wird nun der Vergleich mit |Z| sehr einfach. Es ist bekannt, daß die höchstwertige Eins von 2/3 $N^T$ an einer Position n+p-m-2 an dem Beginn einer modularen Operation ist. Ein Zeiger für das Register Z startet dann bei einem bevorzugten Ausführungsbeispiel an dem MSB von Z und sucht nach der ersten "1" von Z. Wenn das MSB von Z gleich 1 ist, dann ist Z eine negative Zahl, und man sucht statt dessen die erste Null von Z.

Die Differenz der Bitposition der ersten Eins im Register N und im Register Z bestimmt den Hilfs-Verschiebungswert $s_i$.

Da das Ergebnis der Modulo-Operation in der Restklasse N sein muß, wird eine Endreduktion Modulo N durchgeführt, es muß also eine Rücktransformation (Schritt 540 in Fig. 5) durchgeführt werden.

Die Transformation von N zu $N^T$ hat die folgenden Vorteile im Vergleich zum bekannten ZDN-Vergleich:

Statt der Berechnung von 2/3 N innerhalb des Kryptocoprozessors kann eine einfache Transformation von N in $N^T$ in der Host-CPU durchgeführt werden.

Auf dem Chip werden kein ZDN-Register und keine Komparatorlogik benötigt, weshalb die Chipgröße kleiner und die Komplexität des Coprozessors geringer werden.

Schließlich kann die Transformation von N in $N^T$ mit einer Randomisierung des Moduls N kombiniert werden, wie es anhand von Fig. 9 dargestellt ist. Wenn R eine s Bit lange zufällige Zahl ist, hat der randomisierte transformierte Modul $N^T$ die in Fig. 9 gezeigte Form. Durch die Randomisierungszahl R wird der randomisierte transformierte Modul im Vergleich zu dem Fall, bei dem keine Randomisierung durchgeführt worden ist (Fig. 7) um s Bit länger, also um die Anzahl der Stellen von R.

Gleichungsmäßig läßt sich dies folgendermaßen ausdrücken:

$$N^T = T \; N$$

$$= T(2^{n-m} \; N_T \; + \; N_R)$$

Der randomisierte Transformator T lautet dann folgendermaßen:

$$T = \left| \frac{2^{P-2} - 2^{P-3} + R}{N_T} \right|$$

Damit ergibt sich folgender Ausdruck für den randomisierten transformierten Modul:

$$N^T = \left| \frac{2^{P-2} + 2^{P-3} + R}{N_T} \right| (2^{n-m} N_T + N_R)$$

$$N^T = (2^{n+p-m-2} + 2^{n+p-m-3} + R \; 2^{n-m}) \; \frac{N_T}{N_T} + (2^{P-2} + 2^{P-3} + R) \; \frac{N_R}{N_T}.$$

Wenn für p gleich 144 Bits, m gleich 16 Bit und s gleich 112 Bit eingesetzt werden, ergibt sich für den transformierten Modul $N^T$ einschließlich Randomisierung folgender Wert:

$$N^T = 2^{n+126} + 2^{n+125} + R \; 2^{n-16} + N_R \; \frac{2^{144} + 2^{143} + R}{N_T}.$$

Die Bitlänge von $N^T$ ist dann:

$$L(N^T) = n+p-m = n+m+s = n+16+112 = n+128 \text{ Bits}$$

Fig. 10 zeigt ein Rechenwerk, das nunmehr kein ZDN-Register hat, sondern lediglich noch eine arithmetische Einheit 700, ein C-Register 710, ein N-Register 720 und ein Z-Register 730, wobei im N-Register 720 nun nicht mehr der Modul bzw. ein verschobener Modul gespeichert ist, sondern der transformierte Modul bzw. ein verschobener transformierter Modul oder aber ein randomisierter transformierter Modul oder ein verschobener randomisierter transformierter Modul.

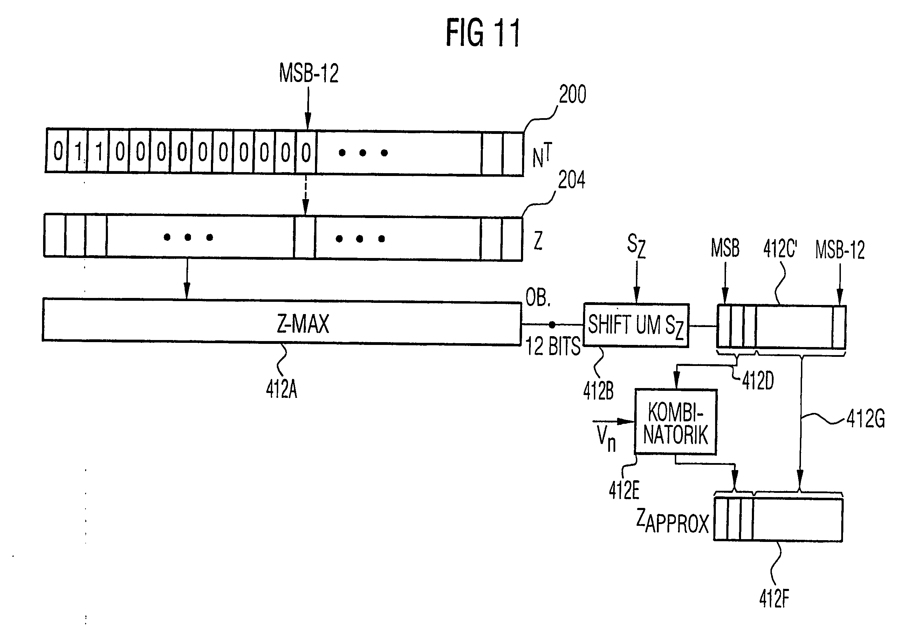

Nachfolgend wird anhand von Fig. 11 eine spezielle Ausführungsform einer Schaltung zum Berechnen einer approximierten Operanden-Addition für einen Iterationsschritt dargestellt. Fig. 11 zeigt wieder das Modulregister 200 sowie das Z-Register 204. In Fig. 11 ist der Fall des transformierten Moduls gezeigt, dessen obere Bits gemäß Fig. 7 mit 011000 ..... 000 beispielsweise bis zum Bit mit der Ordnung MSB-12 unabhängig davon, welcher Modul tatsächlich einer Berechnung zugrunde liegt, bekannt sind. Zur Berechnung der approximierten Drei-Operanden-Addition wird zunächst der Multiplikand C ignoriert. Darüber hinaus werden nur die oberen 12 Bits von Z beispielsweise mittels eines speziellen Z-Multiplexer 412a aus dem Z-Register 204 ausgelesen. Daraufhin werden diese oberen 12 Bits um $s_z$ mittels eines kleinen Shifters 412b nach links verschoben. Es ergibt sich damit ein approximierter geshifteter Z-Wert, der durch ein Zwischenregister 412c symbolisch angedeutet ist. Es sei darauf hingewiesen, daß die Speicherung dieses Werts nur sehr kurz vonstatten gehen muß, so daß kein eigenes Register vorgesehen werden braucht, sondern daß ein Bus, auf dem die entsprechenden Bits übertragen werden, ausreichend ist. Aufgrund der Tatsache, daß der Modul bekannt ist, und daß von dem Modul, da er der transformierte Modul ist, lediglich die oberen drei Bits und insbesondere nur das zweite und das dritte Bit eine 1 sind, während die restlichen Bits eine 0 sind, werden nur die obersten drei Bit des verschobenen letzten Zwischenergebnisses benötigt, wie es durch eine Auswahl 412d angedeutet ist. Diese drei Bits werden in eine kombinatorische Schaltung 412e eingespeist, in die ferner das Vorzeichen des Moduls $v_n$ eingespeist wird, während die oberen drei Bits des Moduls, also "011" in der Kombinatorik 412e fest verdrahtet sind. Die Kombinatorik 412e liefert dann die oberen drei Bits des approximierten Zwischenergebnisses, das wieder als weiteres Zwischenergebnisregister 412f angedeutet ist. Die anderen neun Bits des approximierten Zwischenergebnisses können ohne weiteres aus dem Zwischenergebnisregister 412c herunterkopiert werden, wie es durch einen Pfeil 412g dargestellt ist.

Aus Fig. 11 ist zu sehen, daß im Falle der Verwendung des transformierten Moduls lediglich eine Berechnung mit drei Bits durchgeführt werden muß, wobei jedoch die Bits des "Additionspartners" abgesehen von ihrem Vorzeichen bereits bekannt sind, so daß klar wird, daß die Berechnung des approximierten Zwischenergebnisses $Z_{approx}$ sehr schnell vonstatten gehen kann.

Es sei darauf hingewiesen, daß sich herausgestellt hat, daß mit einem solchermaßen approximierten Z[L-1, L-12] die Shift- und Vorzeichen-Werte für den nächsten Iterationsschritt fast immer exakt berechnet werden. In allen anderen Fällen, in denen die Approximation von Z zu schlecht bzw. zu grob war, erhält man zwar suboptimale Shift- und Vorzeichen-Werte. Diese suboptimalen Shift- und Vorzeichen-Werte führen jedoch nicht dazu, daß ein tatsächlicher Rechenfehler auftritt, sondern führen lediglich dazu, daß zum Berechnen einer modularen Multiplikation mehr Zyklen benötigt werden, als im optimalen Fall. Eine solche Zunahme, d. h. Verschlechterung der Performance, ist jedoch wesentlich kleiner als der Gewinn durch die parallele Ausführung einer approximierten Operanden-Addition, um ein approximiertes Zwischenergebnis für einen gerade betrachteten Iterationsschritt zu berechnen, um unter Verwendung dieses approximierten Zwischenergebnisses dann bereits parallel zur Berechnung des exakten Zwischenergebnisses die Vorausschau-Parameter für den nächsten Iterationsschritt zu ermitteln.

Die Einrichtung zum Berechnen eines approximierten Zwischenergebnisses kann ferner mit geringem Aufwand an Chipfläche implementiert werden, so daß eine nahezu Verdoppelung der Geschwindigkeit des Rechenwerks nur durch eine sehr kleine "Ausgabe" an Chipfläche erkauft werden muß.

Nachfolgend wird Bezug nehmend auf die Fig. 12 bis 17b auf ein bevorzugtes Ausführungsbeispiel eingegangen, bei dem der Multiplikand verschoben wird und der Modul fest ist, bei dem eine Beschleunigung des Verfahrens unter Verwendung einer Berechnung eines approximierten Zwischenergebnisses $Z_{approx}$ verwendet wird und bei dem ferner zur weiteren Beschleunigung eine Modultransformation eingesetzt wird.

Die Fig. 12 bis 17b stellen gewissermaßen eine Flußdiagrammdarstellung des erfindungsgemäßen Verfahren in Form eines intuitiven Pseudo-Codes dar. Die Fig. 12 bis 17b zeigen ferner, daß das erfindungsgemäße Konzept je nach Gegebenheiten nicht nur in Hardware sondern auch in Software implementiert werden kann. Die Implementation kann auf einem digitalen Speichermedium, insbesondere einer Diskette oder CD mit elektronisch auslesbaren Steuersignalen erfolgen, die so mit einem programmierbaren Computersystem zusammenwirken können, daß das erfindungsgemäße Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens realisiert werden, wenn das Computer-Programm auf einem Computer abläuft.

Fig. 12 zeigt eine Übersicht über die im einzelnen verwendeten Variablen und den Typ, den die Variablen haben. Die Variable Csh wird, wie es in Fig. 3 bei 108b dargestellt ist, auf 3 definiert, wobei diese den Shifter für den Multiplikanden C spezifiziert, derart, daß ein Multiplikanden-Verschiebungswert $s_c$ von -3 bis +3 verwendet werden kann. Die Variable Zsh beträgt gleich 5 und definiert, wie es im Block 108a von Fig. 3 dargestellt ist, die Größe des Schiebers für das Zwischenergebnis, also die Größe, die der Zwischenergebnis-Verschiebungswert $s_z$ haben kann. Die Variable NoZeros definiert die Anzahl von Nullen (Number of Zeros), die der transformierte Modul $N^T$ im Register 200 hat, und zwar ausgehend von dem MSB-12 in Fig. 11 nach oben. Sie ist in Fig. 12 als die Summe von Csh und Zsh definiert, obgleich hierfür auch andere Größen genommen werden können. Die Variable NoTopBits beziffert insgesamt die Anzahl von oberen Bits des Z-Registers 204, die von dem Z-Multiplexer 412a aus dem Z-Register 204 ausgelesen werden, um ein approximiertes Zwischenergebnis $Z_{approx}$ zu berechnen. Aus Fig. 12 ist ersichtlich, daß die Variable NoTopBits gleich 12 beträgt, also NoZeros (= 8) +4. In Fig. 12 ist ferner eine Variable MaxRegBitLength spezifiziert, die die Registerlänge des gesamten Rechenwerks spezifiziert. Diese Zahl ist in Fig. 12 beliebig auf 160 festgelegt worden. Alternativ könnte diese Zahl natürlich auch 1024, 2048 oder auch z. B. deutlich über 2048 liegen und beispielsweise 2304 betragen, um für RSA-Module einen ausreichenden Platz an Underflow-Buffer 210 (Fig. 2) und auch einen ausreichenden Platz für die Aufnahme des transformierten Moduls, der ja größer als der normale Modul ist, zu liefern.

Die Variable Debug ist eine Ausgabevariable, die im weiteren nicht von größerer Bedeutung ist.

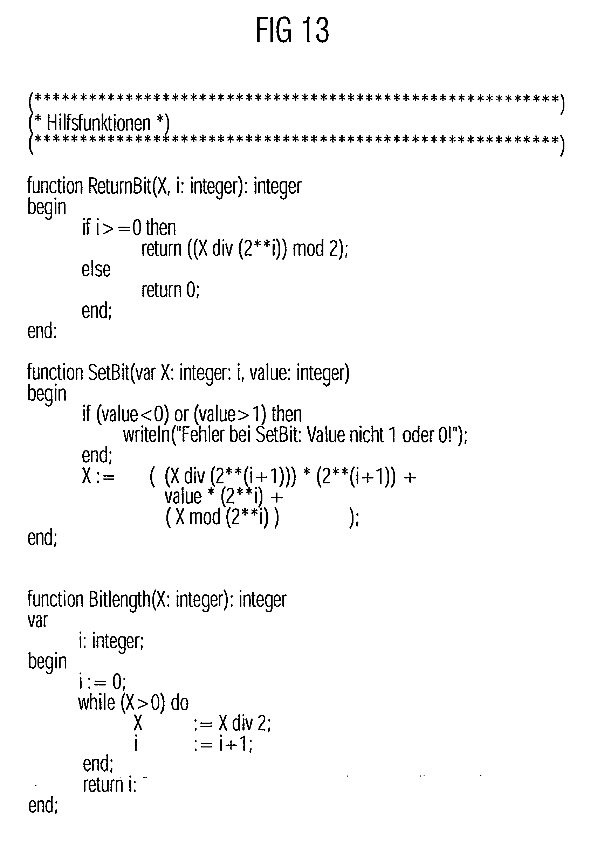

Anhand von Fig. 13 werden einige Hilfsfunktionen dargestellt, die für in späteren Figuren dargestellte Verfahren benötigt werden. So liefert die Funktion ReturnBit das Bit an der Stelle i einer Zahl X.

Die Funktion SetBit ist in der Lage, das Bit an der Stelle i einer Zahl X mit einem durch "Value" spezifizierten Wert, also 0 oder 1, zu belegen.

Die Funktion BitLength ist in der Lage, die Länge einer Zahl in einem Register von einem LSB zu einem MSB zu berechnen. Anhand des Registers 204 in Fig. 4 würde die Funktion BitLength die Anzahl von Bits zwischen dem MSB 220 und dem LSB 214 liefern.

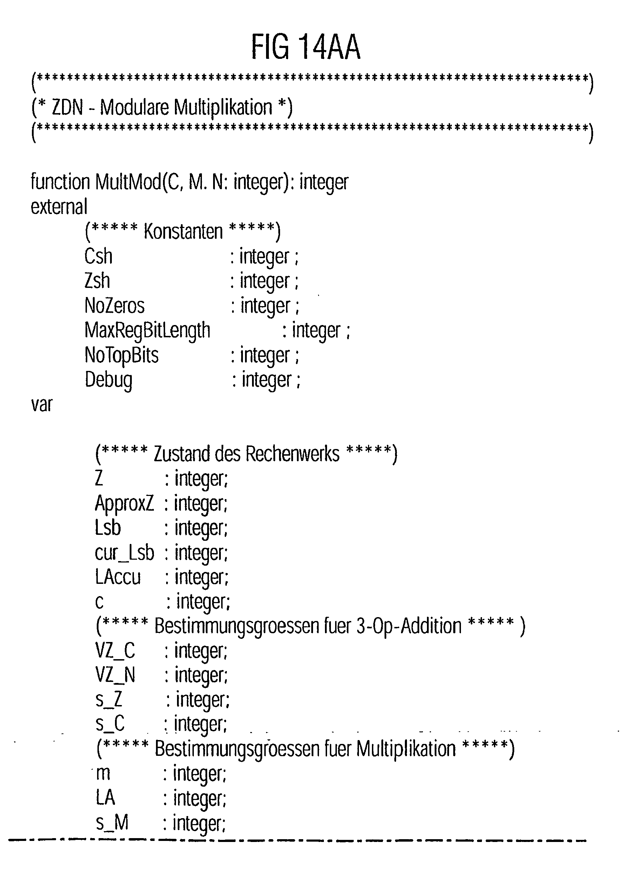

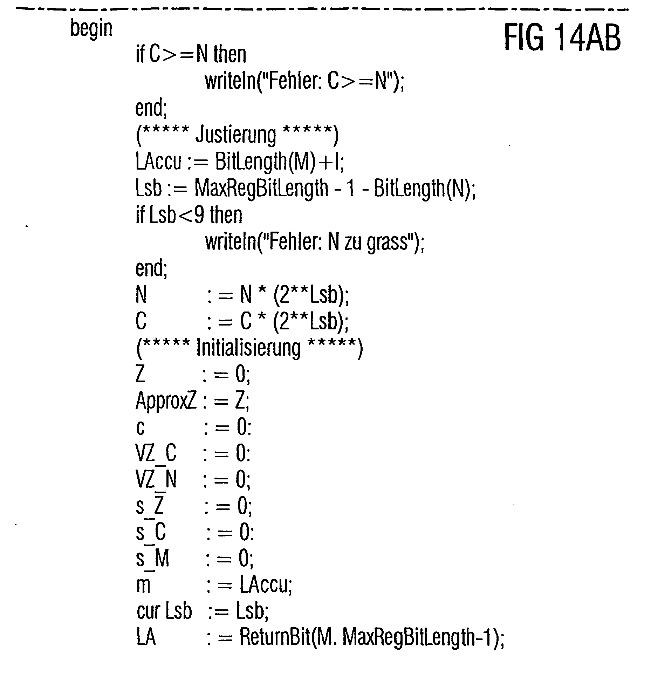

Fig. 14a stellt Einstellungen/Definitionen bzw. Justierungen und Initialisierungen für die modulare Multiplikation, wie sie anhand von Fig. 1 schematisch dargestellt ist, dar. Die externen Variablen wurden bereits anhand von Fig. 12 erläutert.

Im Block "Zustand des Rechenwerks" werden benötigte Variablen hinsichtlich ihres Typs definiert. So bedeutet die Variable Z das Zwischenergebnis. Die Variable ApproxZ bedeutet das approximierte Zwischenergebnis, das durch den Block 412 von Fig. 4 beispielsweise berechnet wird und mit 414 in Fig. 4 bezeichnet ist. Die Variable Lsb liefert gewissermaßen das Komma des Multiplikanden. Zu Beginn einer Berechnung gibt die Variable Lsb die Länge des Underflow-Buffers 210 in Bits an und beträgt bei dem in Fig. 2 gezeigten Beispiel beispielsweise 9. Bei dem in Fig. 2 dargestellten Zwischenzustand, bei dem das LSB 212 des Multiplikanden bereits in den Underflow-Buffer 210 geschoben worden ist, würde die Variable Lsb beispielsweise 4 betragen, um zu bedeuten, daß noch vier Bit im Underflow-Buffer für eine weitere Verschiebung des Multiplikanden nach unten möglich sind.

Die Variable cur_lsb ändert sich mit jeder Verschiebung des Multiplikanden C und begrenzt den Shift-Wert $s_c$, wie später noch dargestellt werden wird. Die Variable LAccu definiert die Länge des Multiplikators in Bit. Die Variable c sagt aus, um wie viel der Multiplikand C bereits nach unten geshiftet worden ist. Die Summe aus c und cur_Lsb ist somit konstant und entspricht immer der Länge des Underflow-Buffers 210, der bis zu 300 Bits betragen kann und vorzugsweise zwischen 30 und 50 Bits liegt. Es sei darauf hingewiesen, dass dieser Wert variieren kann, da er letztendlich von der Größe der involvierten Zahlen abhängt.

Im Block "Bestimmungsgrößen für die Drei-Operanden-Addition werden die Vorausschau-Parameter definiert, die bei einem bevorzugten Ausführungsbeispiel der vorliegenden Erfindung verwendet werden. So ist die Variable VZ C das Vorzeichen $v_c$ im Block 112 von Fig. 1. Die Variable VZ_N stellt das Vorzeichen des Moduls $v_n$ in Block 112 von Fig. 1 dar. Die Variable s_Z stellt den Zwischenergebnis-Verschiebungswert im Block 112 von Fig. 1 dar. Schließlich stellt die Variable s C den Multiplikanden-Verschiebungswert dar, wie er in Block 112 von Fig. 1 dargestellt ist und im Block 106 von Fig. 1 berechnet wird.

Die Variablen in dem Abschnitt "Bestimmungsgrößen für die Multiplikation" beziehen sich auf den Multiplikations-Vorausschau-Algorithmus. So ist m die Nummer des gerade vom Multiplikator betrachteten Bits, wobei, wie es bekannt ist, Multiplikatorbits von oben nach unten verarbeitet werden. So lange m größer als 0 ist, sind noch Multiplikatorbits vorhanden. Der größte Wert, den m annehmen kann ist LAccu, also vor einer beginnenden iterativen Multiplikation, wo noch keine Stelle des Multiplikators abgearbeitet worden ist.

Die Variable LA definiert eine verwendete Look-Ahead-Regel, wobei die Look-Ahead-Regeln verwendet werden können, wie sie in der DE 3631992 C2 (entsprechend dem U.S.-Patent Nr. 4,870,681) beschrieben sind. Die Variable s_M ist der Multiplikations-Verschiebungswert $s_m$, wie er durch den Block 100 von Fig. 1 berechnet wird.

Zunächst werden die einzelnen Variablen unter Verwendung der gegebenen Größen justiert und initialisiert. Im einzelnen wird auf die Variable Lsb hingewiesen, die anhand der Bitlänge eines gerade zu verarbeitenden Moduls N (bzw. transformierten Moduls $N^T$) eingestellt wird. Daraus wird ersichtlich, daß der Underflow-Buffer abhängig von einem verwendeten Modul für jede z. B. RSA-Berechnung, also für eine modulare Exponentiation mit einem Modul neu initialisiert wird. Ferner wird ersichtlich, daß der Modul linksbündig im Register ausgerichtet wird, was bedeutet, daß für kleinere Module auch ein größerer Underflow-Buffer zur Verfügung steht und umgekehrt.

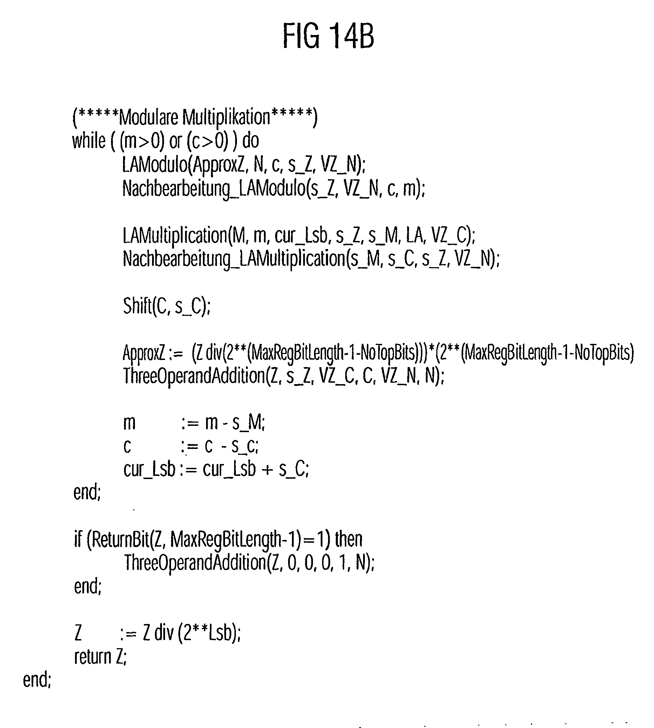

Fig. 14b zeigt im Pseudocode das Verfahren, das gemäß den Fig. 1 und 4 im Blockschaltbildform dargestellt worden ist. Die Iteration wird durchgeführt, bis Abbruchbedingungen erfüllt sind. Abbruchbedingungen sind zum einen, daß m gleich 0 ist, also daß alle Multiplikatorstellen verarbeitet sind, und daß c gleich 0 ist, also daß der Multiplikand am Ende der gesamten modularen Multiplikation wieder hinsichtlich eines LSB 212 mit dem LSB 208 des Moduls N (Bezug nehmend auf Fig. 2) ausgerichtet ist. Typischerweise wird zunächst m gleich 0 sein, während dann erst, einige Zyklen später, c gleich 0 ist, da die Reduktion, wie es ausgeführt worden ist, der Multiplikation etwas nachläuft bzw. "hinterherhinkt".

Zunächst wird eine erste Funktion LAModulo ausgeführt, und zwar unter Verwendung eines approximierten Zwischenergebnisses. Die Funktion LAModulo, die nachfolgend noch erläutert wird, stellt somit die Funktionalität der Einrichtung 417 dar, in der Vorausschauparameter für den nächsten Iterationsschritt unter Verwendung eines approximierten Zwischenergebnisses $Z_{approx}$ berechnet werden.

Hierauf findet eine Funktion Nachbearbeitung_LAModulo, eine Funktion LAMultiplication und eine Funktion Nachbearbeitung_LAMultiplication statt, um generell den Multiplikations-verschiebungswert $s_z$ sowie den Multiplikations-Vorausschau-Parameter $v_n$ zu berechnen. Entsprechende Reduktions-Vorausschau-Parameter $s_z$ und $v_n$ werden in der vorstehenden Funktion LAModulo berechnet. Die Funktionen LAModulo, Nachbearbeitung_LAModulo, LAMultiplication sowie Nachbearbeitung_LAMultiplication finden alle in der Einrichtung 417 statt, in der nicht die Vorausschau-Parameter für die aktuelle Drei-Operanden-Addition berechnet werden, sondern in der die Vorausschau-Parameter bereits für den nächsten Iterationsschritt ausgerechnet werden.

Hierauf wird der Multiplikand C um den entsprechenden Multiplikanden-Verschiebungswert verschoben, was der Funktionalität der Einrichtung 108 von Fig. 1 bzw. je nach Definition der Einrichtung 400 von Fig. 4 zum exakten Berechnen der Drei-Operanden-Addition entspricht.

Dann wird das approximierte Zwischenergebnis bereits für den nächsten Iterationsschritt belegt, um dann eine exakte Drei-Operanden-Addition mit der Funktion ThreeOperandAddition, und zwar eine exakte Drei-Operanden-Addition für den aktuellen Iterationsschritt durchzuführen. Hierauf werden die Variablen m, c und cur_lsb angepaßt.

So lange die Iterations-Abbruchbedingungen m gleich 0 oder c gleich 0 nicht erfüllt ist, wird die While-Schleife durchlaufen.

In der letzten "if"-Schleife wird dann, wenn ein oberes Bit des Z-Registers gleich 1 ist, was auf eine negative Zahl hindeutet, eine degenerierte Drei-Operanden-Addition durchgeführt, d. h. daß zum aktuellen (negativen) Zwischenergebnis ein Modul N mit dem Vorzeichen $v_n$ gleich +1 hinzuaddiert wird, um am Ende ein positives Zwischenergebnis zu haben, bei dem die Bits unterhalb des LSB, also die Underflow-Buffer-Bits abgeschnitten werden, wie durch die letzte "div"-Operation geschieht.

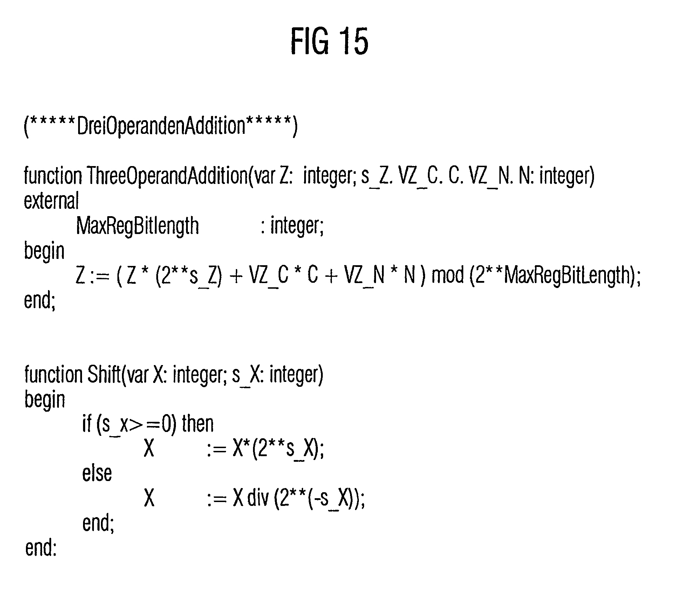

Nachfolgend werden die in Fig. 14b angeführten Funktionen näher erläutert. Fig. 15 zeigt eine Übersicht über die Funktion Drei-Operanden-Addition, die derart ausgeführt wird, wie es in Block 112 von Fig. 1 dargestellt ist. Im einzelnen ist aus Fig. 15 ersichtlich, daß bei der implementierten Drei-Operanden-Addition die Verschiebung von C außerhalb der Drei-Operanden-Addition ausgeführt wird, während die Verschiebung von Z um $s_z$ innerhalb der Drei-Operanden-Addition ausgeführt wird. Dies hat bei bestimmten Ausführungen Vorteile. Alternativ könnte jedoch auch die Verschiebung von C innerhalb der Drei-Operanden-Addition ausgeführt werden, oder es könnten beide Verschiebungen außerhalb der Drei-Operanden-Addition ausgeführt werden.

Es sei darauf hingewiesen, daß die modulare Reduktion mit dem Modul 2**MaxRegBitLength lediglich dazu dient, Software-mäßig zu simulieren, daß ein höchstwertiges Bit des Z-Registers in dem Fall, in dem $s_z$ so gewählt wurde, daß das MSB 220 gleichauf mit dem MSB 206 in Fig. 2 kommt, bei einer Addition und bei einem Carry-Rippeln bis ganz nach oben herausfallen kann, was jedoch, wie es in der Technik bekannt ist, nicht kritisch ist, wenn spezielle Carry-Behandlungsroutinen eingesetzt werden.

Die Shift-Funktion in Fig. 15 ist selbsterklärend und zeigt softwaretechnisch, wie ein Registerinhalt X um einen Shift-Wert s_X entweder nach links oder nach rechts verschoben wird. Eine Verschiebung nach links bedeutet in binärer Darstellung eine Multiplikation mit $2^{sx}$. Eine Verschiebung nach rechts bedeutet eine Division durch $2^{sx}$.

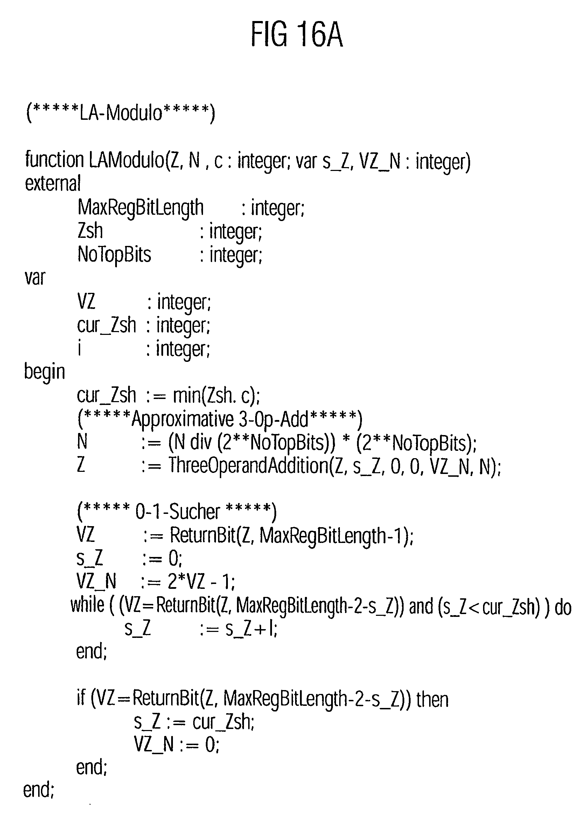

Die Funktion LAModulo, die in Fig. 16a dargestellt ist, ist wirksam, um die Reduktions-Parameter zu berechnen, die zum einen den Zwischenergebnis-Verschiebungswert $s^z$ und zum anderen das Vorzeichen des Moduls VZ_N umfassen. Als Eingangsgrößen werden Z, N und c bevorzugt. Zunächst wird die Variable cur_Zsh auf das Minimum der Variablen Zsh, also die Shifter-Länge des Zwischenergebnis-Shifters und c, also die aktuelle Abweichung des LSB des Multiplikanden vom Start-LSB 208 in Fig. 2 eingestellt. Hierauf wird die approximierte Drei-Operanden-Addition durchgeführt, die prinzipiell genauso abläuft wie die exakte Drei-Operanden-Addition, jedoch mit dem Unterschied, daß nur die oberen 12 Bits bzw. die NoTopBits von N genommen werden, und daß in der Drei-Operanden-Additions-Formel $s_c$ und das Vorzeichen von C, also $v_c$ zu 0 gesetzt sind.

Der nachfolgende 0/1-Sucher liefert zunächst das höchstwertige signifikante Bit des Registers Z und inkrementiert dann den Verschiebungswert $s_z$ so lange $s_z$ kleiner als die Variable cur_Zsh ist und gleichzeitig nicht die maximale Registerlänge überschreitet.

Der letzte Fall in der if-Schleife betrifft den Fall, der in Fig. 2 nicht gezeichnet ist, bei dem also $s_z$ größer gewählt werden könnte, als es durch den Schieber Zsh erlaubt ist, bei dem also das MSB im Z-Register 4 um mehr Bits als durch Zsh vom MSB 206 des Moduls im Modulregister 200 entfernt ist. In diesem Fall wird $s_z$ über cur_Zsh auf Zsh eingestellt. Nachdem hier das Zwischenergebnis Z definitiv um eines oder mehrere Bits kleiner als der Modul N ist, wird eine Reduktion in Form einer Modulsubtraktion der Drei-Operanden-Addition unterdrückt, was sich dadurch äußert, daß der Reduktions-Vorausschau-Parameter $v_n$ zu 0 gesetzt wird. Damit wird eine Reduktion unterbunden. Würde dennoch eine Reduktion durchgeführt werden, so wäre das Zwischenergebnis negativ und insbesondere betragsmäßig größer als es vorher war. Eine Unterbindung der Reduktion in dem Fall, in dem das Zwischenergebnis Z nicht vollständig nach oben geschoben werden kann, aufgrund einer begrenzten Shifter-Länge, steigert die Effizienz des erfindungsgemäßen Verfahrens daher erheblich.

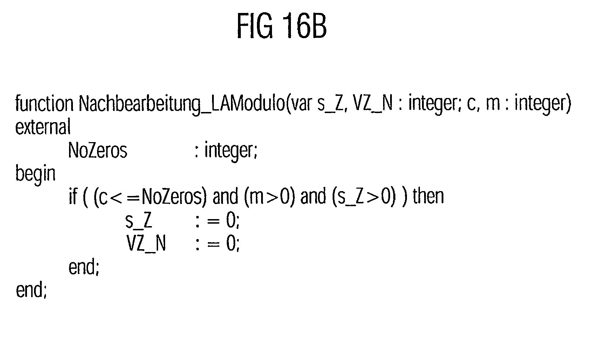

In Fig. 16b ist die Funktion Nachbearbeitung_LAModulo dargestellt. Falls m größer 0 ist, also falls noch Multiplikatorstellen zu verarbeiten sind, und falls $s_z$ größer 0 ist, während c kleiner als die Anzahl von Nullen im Hinblick auf den transformierten Modul ist, wird keine Verschiebung vorgenommen, sondern es wird $s_z$ auf 0 gesetzt. Gleichzeitig wird auch eine Reduktion unterbunden, d. h. das Vorzeichen $v_n$ wird zu 0 gesetzt.

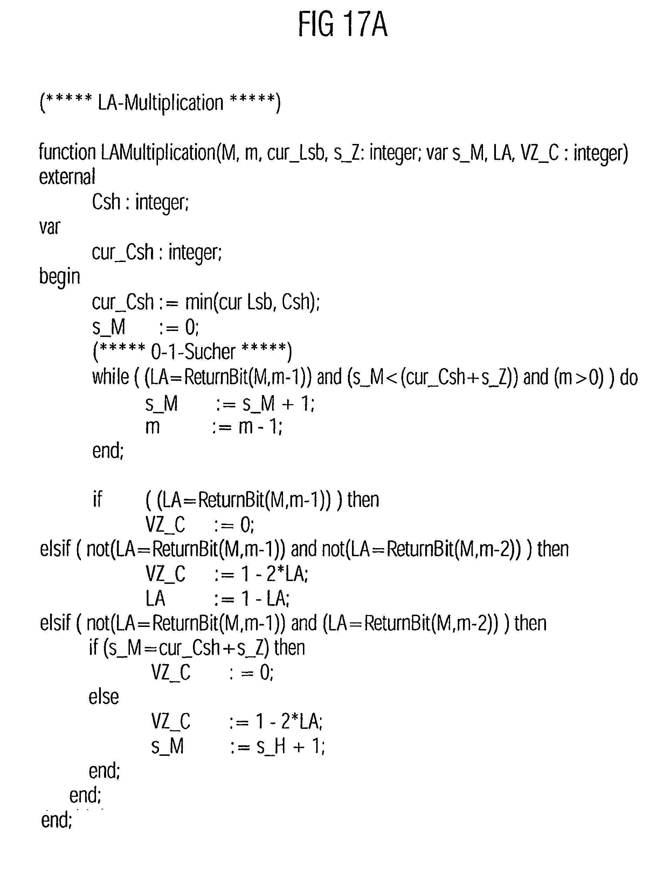

Fig. 17a zeigt die Funktion LAMultiplication, die den Multiplikations-Vorausschau-Algorithmus definiert. Zunächst werden die Variablen cur_Csh und $s_m$ initialisiert, wie es in Fig. 17a dargestellt ist. Dann wird ein 0/1-Sucher ausgeführt, während dem die Variable $s_m$ inkrementiert wird. Ist die Abbruchbedingung ohne Sondersituation erfüllt, so ergibt die While-Schleife bereits den Multiplikations-Verschiebungswert $s_m$, der im Block 100 von Fig. 1 berechnet wird.

Hierauf wird abhängig von dem Look-Ahead-Parameter LA, der mit Bits des Multiplikators verglichen wird, eine entsprechende Sonderbehandlung durchgeführt, um z. B. das Vorzeichen $v_c$ des Multiplikanden zu 0 zu setzen, wenn beispielsweise ein größerer Multiplikations-Verschiebungswert möglich ist, als eigentlich durch die Schieber erlaubt wird. In diesem Fall wird lediglich hochgeschoben, modular reduziert, jedoch kein Multiplikand hinzuaddiert.

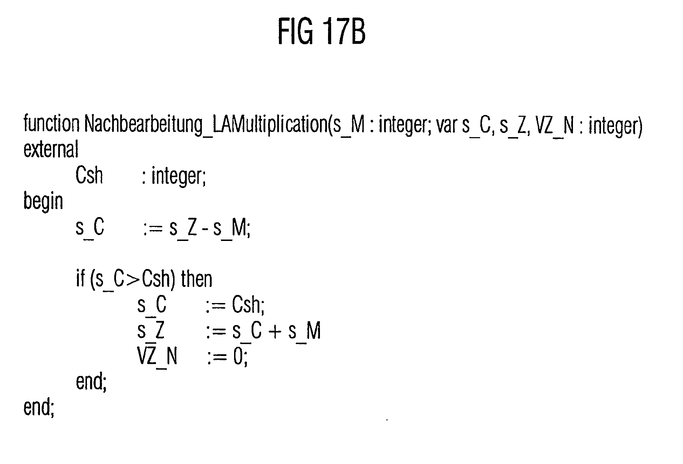

Fig. 17b zeigt die Funktion Nachbearbeitung_LAMultiplication, in der die Funktionalität der Einrichtung 106 durchgeführt wird, in der also $s_c$ aus $s_z - s_m$ berechnet wird.

Wenn ein $s_c$ erhalten wird, das größer als die erlaubte Länge $C_{sh}$ des C-Shifters ist, wird $s_c$ gleich der maximalen Shifter-Länge gesetzt, wird $s_z$ derart eingestellt, wie es in Fig. 17b gezeigt ist, und wird das Vorzeichen des Moduls $v_n$ in der Drei-Operanden-Addition im Block 112 von Fig. 1 zu 0 gesetzt, so daß keine Reduktion stattfindet, da nicht der maximale Verschiebungswert genommen worden ist, sondern ein Verschiebungswert $s_z$, der in der Funktion Nachbearbeitung, die in Fig. 17b gezeigt ist, eingestellt worden ist.

Bezugszeichenliste

| | |
|---|---|
| 100 | Einrichtung zum Untersuchen |
| 102 | Multiplikations-Verschiebungswert |
| 104 | Einrichtung zum Ermitteln |
| 106 | Einrichtung zum Berechnen von $s_c$ |
| 108 | Einrichtung zum Verschieben von Z und C |
| 108a | Schieber für Z |
| 108b | Schieber für C |
| 110 | Zwischenergebnis-Verschiebungswert $s_z$ |
| 112 | Einrichtung zum Durchführen der Drei-Operanden-Addition |
| 114 | Zwischenergebnis aus dem aktuellen Iterationsschritt |
| 200 | Modulregister |
| 202 | Multiplikanden-Register |
| 204 | Zwischenergebnis-Register |
| 206 | MSB des Moduls |
| 208 | LSB des Moduls |
| 210 | Underflow-Buffer |
| 212 | LSB des Multiplikanden |
| 214 | LSB des Zwischenergebnisses nach einer Drei-Operanden-Addition |
| 218 | Maximaler Zwischenergebnis-Verschiebungswert |
| 220 | MSB des Zwischenergebnisses |
| 400 | Einrichtung zum Durchführen einer exakten Drei-Operanden-Addition |
| 400' | Exakte Drei-Operanden-Addition für den aktuellen Iterationsschritt |
| 402 | Exaktes vorheriges Zwischenergebnis |
| 404 | Modul N |
| 406 | Multiplikand C |
| 408 | Vorausschau-Parameter für den vorherigen Iterationsschritt |
| 410 | Exaktes Zwischenergebnis als Ergebnis des vorherigen Iterationsschritts |
| 412 | Einrichtung zum Durchführen einer approximierten Operanden-Addition |
| 412a | Z-Multiplexer |
| 412b | Shifter |
| 412c | Zwischenspeicher zum Speichern der verschobenen 12 Bits von Z |
| 412d | Kombinatorik-Zuleitung |
| 412e | Kombinatorik |
| 412g | Bitkopierleitung |
| 412f | Speicher für das approximierte Zwischenergebnis |
| 412a | Z-Multiplexer |
| 412b | Shifter |
| 412c | Zwischenspeicher zum Speichern der verschobenen 12 Bits von Z |
| 412d | Kombinatorik-Zuleitung |
| 412e | Kombinatorik |
| 412g | Bitkopierleitung |
| 412f | Speicher für das approximierte Zwischenergebnis |

412'    Approximierte Operanden-Addition für den aktuellen Iterationsschritt
414     Approximiertes aktuelles Zwischenergebnis
416     Multiplikator M
417     Einrichtung zum Berechnen der aktuellen VorausschauParameter
417'    Berechnen der nachherigen Vorausschau-Parameter
418     Aktuelle Vorausschau-Parameter
420     Exaktes Zwischenergebnis für die Berechnung des nachherigen Iterationsschritts
500     Einrichtung zum Transformieren des Moduls
520     Einrichtung zum iterativen Abarbeiten unter Verwendung des transformierten Moduls
540     Einrichtung zum Rücktransformieren des transformierten Ergebnisses
700     Arithmetische Einheit
710     C-Register
720     N-Register
730     Z-Register
740     Iterationsschleife
750     ZDN-Register
760     Steuerlogik für den ZDN-Vergleich
900     Start des ZDN-Verfahrens
910     Multiplikations-Vorausschau-Verfahren für den ZDN-Algorithmus
920     Verschieben von Z nach links oder rechts
930     Reduktions-Vorausschau-Verfahren für den ZDN-Algorithmus
940     Verschieben des Moduls nach links
950     Drei-Operanden-Addition für den ZDN-Algorithmus
960     Ende des ZDN-Algorithmus
1000    Globale Variablen
1010    Initialisierung des Reduktions-Verschiebungswerts
1020    Berechnen von ZDN
1030    Untersuchen von n und $s_N$
1040    Dekrementieren von n
1060    Dekrementieren des Reduktions-Verschiebungswerts
1080    Berechnen von ZDN/2
1100    Vergleich des Zwischenergebnisses mit ZDN
1120    Bestimmen des Reduktions-Vorausschau-Parameters
1140    Bestimmen des Reduktions-Vorausschau-Parameters
1160    Berechnen von n
1180    Berechnen des Reduktions-Vorausschau-Parameters
1200    Untersuchen von n
1220    Berechnen von cur_k
1240    Berechnen von cur_k

**Patentansprüche**

1.  Vorrichtung zum Berechnen einer Multiplikation eines Multiplikators (M) und eines Multiplikanden (C) bezüglich eines Moduls (N) mittels eines Iterationsverfahrens mit mehreren Iterationsschritten, die einen vorherigen Iterationsschritt, einen aktuellen Iterationsschritt und einen auf den aktuellen Iterationsschritt folgenden Iterationsschritt umfassen, mit folgenden Merkmalen:

    einer Einrichtung (400), die zum Durchführen, in dem vorherigen Iterationsschritt, einer exakten Drei-Operanden-Addition unter Verwendung eines vorherigen Zwischenergebnisses (Zvor), des Moduls (N) und des Multiplikanden (C) und unter Verwendung von vorherigen Vorausschau-Parametern (408) angepasst ist, um ein exaktes Zwischenergebnis (410) für den aktuellen Iterationsschritt zu erhalten;
    einer Einrichtung (412), die zum Durchführen, in dem vorherigen Iterationsschritt, einer approximierten Operanden-Addition unter Verwendung des vorherigen Zwischenergebnisses (Zvor) (402) und des Moduls und zumindest eines Teils der vorherigen Vorausschau-Parameter (408) angepasst ist, um ein approximiertes Zwischenergebnis (414) für den aktuellen Iterationsschritt zu erhalten; und
    einer Einrichtung (417), die, in dem vorherigen Iterationsschritt, zum Berechnen von aktuellen Vorausschau-Parametern (418) unter Verwendung des approximierten Zwischenergebnisses (414) und des Multiplikators (416) angepasst ist,

wobei die Einrichtung (400) zum Durchführen der exakten Drei-Operanden-Addition ausgebildet ist, um, in dem aktuellen Iterationsschritt, eine exakte Drei-Operanden-Addition unter Verwendung des exakten Zwischenergebnisses (410) für den aktuellen Iterationsschritt, des Moduls (404), des Multiplikanden (406) und der von der Einrichtung (417) berechneten aktuellen Vorausschau-Parameter durchzuführen, und

wobei die Einrichtung (412) zum Durchführen der approximierten Operanden-Addition ausgebildet ist, um, in dem aktuellen Iterationsschritt, eine approximierte Operanden-Addition unter Verwendung des aktuellen Zwischenergebnisses (Zakt) (410) und des Moduls und zumindest eines Teils der aktuellen Vorausschau-Parameter (418) durchzuführen, um ein approximiertes Zwischenergebnis (422) für den auf den aktuellen Iterationsschritt folgenden Iterationsschritt zu erhalten;

wobei die Einrichtung (417) zum Berechnen ausgebildet ist, um, in dem aktuellen Iterationsschritt, Vorausschau-Parameter für den auf den aktuellen Iterationsschritt folgenden Iterationsschritt unter Verwendung des approximierten Zwischenergebnisses (422) für den auf den aktuellen Iterationsschritt folgenden Iterationsschritt und des Multiplikators (416) zu erhalten; und

einer Steuerung, die ausgebildet ist, um die Einrichtung (400) zum Durchführen der exakten Drei-Operanden-Addition und die Einrichtung (412) zum Durchführen der approximierten Operanden-Addition in dem vorherigen Iterationsschritt und in dem aktuellen Iterationsschritt parallel zu speisen, so dass die beiden Einrichtungen parallel arbeiten können.

2. Vorrichtung nach Anspruch 1,

bei der die Einrichtung (400) zum Durchführen der exakten Drei-Operanden-Addition dann, wenn sie die exakte Drei-Operanden-Addition durchführt, eine erste Zeitdauer zur Durchführung benötigt, und

bei der die Einrichtung (412) zum Durchführen der approximierten Operanden-Addition dann, wenn sie die approximierte Operanden-Addition ausführt, und die Einrichtung (417) zum Berechnen von aktuellen Vorausschau-Parametern dann, wenn sie die Berechnung durchführt, gemeinsam eine zweite Zeitdauer zur Berechnung benötigen, die kleiner oder gleich der ersten Zeitdauer ist.

3. Vorrichtung nach einem der vorhergehenden Ansprüche,

bei der die Einrichtung (412) zum Durchführen der approximierten Operanden-Addition ausgebildet ist, um ohne Berücksichtigung des Multiplikanden (C) zu arbeiten.

4. Vorrichtung nach einem der vorhergehenden Ansprüche,

bei der die Einrichtung (412) zum Durchführen der approximierten Operanden-Addition ausgebildet ist, um von dem vorherigen Zwischenergebnis und dem Modul lediglich eine Anzahl von höherwertigen Bits zu verwenden, die kleiner als eine Gesamtanzahl von Bits des vorherigen Zwischenergebnisses und des vorherigen Moduls ist.

5. Vorrichtung nach Anspruch 4,

bei der der Modul ein transformierter Modul ist, der unter Verwendung einer Transformationsvorschrift von einem Modul abgeleitet ist, der von einer kryptographischen Berechnung vorgegeben ist, wobei die Transformationsvorschrift so ausgebildet ist, dass eine Anzahl von höherwertigen Bits des Moduls vorbekannt ist.

6. Vorrichtung nach Anspruch 5,

bei der die Transformationsvorschrift so gestaltet ist, dass die Anzahl von höherwertigen Bits des Moduls eine bestimmte Anzahl höchstwertiger Bits mit einem Zustand und restliche Bits mit einem entgegengesetzten Zustand aufweist.

7. Vorrichtung nach Anspruch 6, bei der die Einrichtung zum Durchführen der approximierten Drei-Operanden-Addition (412) ausgebildet ist, um das approximierte Zwischenergebnis aus ersten Bits (412g) des um einen Verschiebungsparameter ($s_z$) verschobenen vorigen Zwischenergebnisses, wobei die ersten Bits die Bits sind, deren Wertigkeiten nicht Wertigkeiten der Anzahl (412d) von höchstwertigen Bits des transformierten Moduls entsprechen, und zweiten Bits zusammenzusetzen, wobei die zweiten Bits aus einer Kombination aus der Anzahl (412d) von höchstwertigen Bits des transformierten Moduls und des Vorzeichen-Parameters ($v_n$) erhalten werden.

8. Vorrichtung nach Anspruch 7,

bei der die Einrichtung zum Durchführen der approximierten Drei-Operanden-Addition fest verdrahtet ist.

9. Vorrichtung nach einem der vorhergehenden Ansprüche,

bei der die Einrichtung zum Berechnen der aktuellen Vorausschau-Parameter ausgebildet ist, um einen Zwischenergebnis-Verschiebungswert ($s_z$) und einen Multiplikanden-Verschiebungswert ($s_c$) zu berechnen, wobei der Modul (N) nicht verschoben wird.

**10.** Vorrichtung nach Anspruch 9,
bei der die Einrichtung zum Berechnen von aktuellen Vorausschau-Parametern ausgebildet ist, um ein Multiplikanden-Vorzeichen ($v_c$) sowie ein Modul-Vorzeichen ($v_n$) als weitere Vorausschau-Parameter zu berechnen.

**11.** Verfahren zum Berechnen einer Multiplikation eines Multiplikators (M) und eines Multiplikanden (C) bezüglich eines Moduls (N) mittels eines Iterationsverfahrens mit mehreren Iterationsschritten, die einen vorherigen Iterationsschritt, einen aktuellen Iterationsschritt und einen auf den aktuellen Iterationsschritt folgenden Iterationsschritt umfassen, innerhalb einer kryptographischen Berechnung, wobei der Multiplikator (M), der Multiplikand (C) und der Modul (N) Parameter der kryptographischen Berechnung sind, mit folgenden Schritten:

in dem vorherigen Iterationsschritt,
Durchführen (400) einer exakten Drei-Operanden-Addition unter Verwendung eines vorherigen Zwischenergebnisses (Zvor), des Moduls (N) und des Multiplikanden (C) und unter Verwendung von vorherigen Vorausschau-Parametern (408), um ein exaktes Zwischenergebnis (410) der kryptographischen Berechnung für den aktuellen Iterationsschritt zu erhalten;
Durchführen (412) einer approximierten Operanden-Addition unter Verwendung des vorherigen Zwischenergebnisses (Zvor) (402) und des Moduls und zumindest eines Teils der vorherigen Vorausschau-Parameter (408), um ein approximiertes Zwischenergebnis (414) der kryptographischen Berechnung für den aktuellen Iterationsschritt zu erhalten; und
Berechnen (417) von aktuellen Vorausschau-Parametern (418) unter Verwendung des approximierten Zwischenergebnisses (414) der kryptographischen Berechnung und des Multiplikators (416),
in dem aktuellen Iterationsschritt:

Durchführen (400') einer exakten Drei-Operanden-Addition unter Verwendung des exakten Zwischenergebnisses (410) der kryptographischen Berechnung für den aktuellen Iterationsschritt, des Moduls (404), des Multiplikanden (406) und der aktuellen Vorausschau-Parameter;
Durchführen (412') einer approximierten Operanden-Addition unter Verwendung des aktuellen Zwischenergebnisses (Zakt) (410) und des Moduls und zumindest eines Teils der aktuellen Vorausschau-Parameter (418), um ein approximiertes Zwischenergebnis (422) der kryptographischen Berechnung für den auf den aktuellen Iterationsschritt folgenden Iterationsschritt zu erhalten; und
Berechnen (417') von Vorausschau-Parametern für den auf den aktuellen Iterationsschritt folgenden Iterationsschritt unter Verwendung des approximierten Zwischenergebnisses (422) der kryptographischen Berechnung für den auf den aktuellen Iterationsschritt folgenden Iterationsschritt und des Multiplikators (416).

**12.** Computer-Programm mit einem Programmcode zur Durchführung des Verfahrens nach Anspruch 11, wenn das Programm auf einem Computer abläuft.

**Claims**

**1.** A device for calculating a multiplication of a multiplier (M) and a multiplicand (C) with regard to a modulus (N) using an iteration method comprising several iteration steps, including a preceding iteration step, a current iteration step and an iteration step following the current iteration step, comprising:

means (400) adapted for performing an exact three operand addition in the preceding iteration step using a preceding intermediate result (Zvor), the modulus (N) and the multiplicand (C) and using preceding look-ahead parameters (408) to obtain an exact intermediate result (410) for the current iteration step;
means (412) adapted for performing an approximated operand addition in the preceding iteration step using the preceding intermediate result (Zvor) (402) and the modulus and at least one part of the preceding look-ahead parameters (408) in order to obtain an approximated intermediate result (414) for the current iteration step; and
means (417) adapted for calculating current look-ahead parameters (418) in the preceding iteration step using the approximated intermediate result (414) and the multiplier (416),

wherein the means (400) for performing the exact three operand addition is implemented to perform an exact three operand addition in the current iteration step using the exact intermediate result (410) for the current iteration step, the modulus (404), the multiplicand (406) and the current look-ahead parameters calculated by the means (417), and wherein the means (412) for performing the approximated operand addition is implemented to perform an approximated operand addition in the current iteration step using the current intermediate result (Zakt) (410) and the modulus and at least part of the current look-ahead parameters (418) to obtain an approximated intermediate result (422) for the iteration step following the current iteration step;

wherein the means (417) for calculating is implemented to obtain look-ahead parameters in the current iteration step for the iteration step following the current iteration step using the approximated intermediate result (422) for the iteration step following the current iteration step and the multiplier (416); and

a controller implemented to feed the means (400) for performing the exact three operand addition and the means (412) for performing the approximated operand addition in the preceding iteration step and in the current iteration step in parallel so that the two means can operate in parallel.

2. The device according to claim 1,
wherein the means (400) for performing the exact three operand addition, when it performs the exact three operand addition, requires a first time period for the performing, and
wherein the means (412) for performing the approximated operand addition, when it performs the approximated operand addition, and the means (417) for calculating current look-ahead parameters, when it performs the calculation, commonly require a second time period for the calculation which is shorter or equal to the first time period.

3. The device according to one of the preceding claims,
wherein the means (412) for performing the approximated operand addition is implemented to operate without consideration of the multiplicand (C).

4. The device according to one of the preceding claims,
wherein the means (412) for performing the approximated operand addition is implemented to use only a number of more significant bits of the preceding intermediate result and the modulus which is smaller than an overall number of bits of the preceding intermediate result and the preceding modulus.

5. The device according to claim 4,
wherein the modulus is a transformed modulus which is derived using a transformation specification from a modulus which is given by a cryptographic calculation, wherein the transformation specification is implemented so that a number of more significant bits of the modulus is already known.

6. The device according to claim 5,
wherein the transformation specification is implemented so that the number of more significant bits of the modulus comprises a certain number of most significant bits in one state and remaining bits in an opposite state.

7. The device according to claim 6, wherein the means for performing the approximated three operand addition (412) is implemented to compose the approximated intermediate result of first bits (412g) of the preceding intermediate result shifted by a shifting parameter ($s_z$), wherein the first bits are the bits whose significances do not correspond to significances of the number (412d) of most significant bits of the transformed modulus, and second bits, wherein the second bits are obtained from a combination of the number (412d) of most significant bits of the transformed modulus and the sign parameter ($v_n$).

8. The device according to claim 7,
wherein the means for performing the approximated three operand addition is hard-wired.

9. The device according to one of the preceding claims,
wherein the means for calculating the current look-ahead parameters is implemented to calculate an intermediate result shift value ($s_z$) and a multiplicand shift value ($s_c$),
wherein the modulus (N) is not shifted.

10. The device according to claim 9,
wherein the means for calculating current look-ahead parameters is implemented to calculate a multiplicand sign ($v_c$) and a modulus sign ($v_n$) as further look-ahead parameters.

**11.** A method for calculating a multiplication of a multiplier (M) and of a multiplicand (C) with regard to a modulus (N) using an iteration method having several iteration steps including a preceding iteration step, a current iteration step and an iteration step following the current iteration step within a cryptographic calculation, wherein the multiplier (M), the multiplicand (C) and the modulus (N) are parameters of the cryptographic calculation, comprising:

in the preceding iteration step
performing (400) an exact three operand addition using a preceding intermediate result (Zvor), the modulus (N) and the multiplicand (C) and using preceding look-ahead parameters (408) in order to obtain an exact intermediate result (410) of the cryptographic calculation for the current iteration step;
performing (412) an approximated operand addition using the preceding intermediate result (Zvor) (402) and the modulus and at least one part of the preceding look-ahead parameters (408) in order to obtain an approximated intermediate result (414) of the cryptographic calculation for the current iteration step; and
calculating (417) current look-ahead parameters (418) using the approximated intermediate result (414) of the cryptographic calculation and the multiplier (416),
in the current iteration step:

performing (400') an exact three operand addition using the exact intermediate result (410) of the cryptographic calculation for the current iteration step, the modulus (404), the multiplicand (406) and the current look-ahead parameters;
performing (412') an approximated operand addition using the current intermediate result (Zakt) (410) and the modulus and at least part of the current look-ahead parameters (418) to obtain an approximated intermediate result (422) of the cryptographic calculation for the iteration step following the current iteration step; and
calculating (417') look-ahead parameters for the iteration step following the current iteration step using the approximated intermediate result (422) of the cryptographic calculation for the iteration step following the current iteration step and the multiplier (416).

**12.** A computer program comprising a program code for performing the method according to claim 11, when the program is running on a computer.

**Revendications**

**1.** Dispositif pour le calcul d'une multiplication d'un multiplicateur (M) et d'un multiplicande (C) en ce qui concerne un module (N) au moyen d'un procédé d'itération à plusieurs étapes d'itération comprenant une étape d'itération précédente, une étape d'itération actuelle et une étape d'itération suivant l'étape d'itération actuelle, aux caractéristiques suivantes :

un dispositif (400) adapté pour effectuer, à l'étape d'itération précédente, une addition à trois opérandes exacte à l'aide d'un résultat intermédiaire précédent (Zvor), du module (N) et du multiplicande (C) et à l'aide de paramètres de prédiction précédents (408), pour obtenir un résultat intermédiaire exact (410) pour l'étape d'itération actuelle ;
un dispositif (412) adapté pour effectuer, à l'étape d'itération précédente, une addition d'opérandes approximative à l'aide du résultat intermédiaire précédent (Zvor) (402) et du module et d'au moins une partie des paramètres de prédiction précédents (408), pour obtenir un résultat intermédiaire approximatif (414) pour l'étape d'itération actuelle; et
un dispositif (417) adapté, à l'étape d'itération précédente, pour calculer des paramètres de prédiction actuels (418) à l'aide du résultat intermédiaire approximatif (414) et du multiplicateur (416),
le dispositif (400) destiné à effectuer l'addition à trois opérandes exacte étant réalisé de manière à effectuer, à l'étape d'itération actuelle, une addition à trois opérandes exacte à l'aide du résultat intermédiaire exact (410) pour l'étape d'itération actuelle, du module (404), du multiplicande (406) et des paramètres de prédiction actuels calculés par le dispositif (417), et
le dispositif (412) destiné à effectuer l'addition d'opérandes approximative étant réalisé de manière à effectuer, à l'étape d'itération actuelle, une addition d'opérandes approximative à l'aide du résultat intermédiaire actuel (Zakt) (410) et du module et d'au moins une partie des paramètres de prédiction actuels (418), pour obtenir un résultat intermédiaire approximatif (422) pour l'étape d'itération suivant l'étape d'itération actuelle ;
le dispositif (417) destiné à calculer étant réalisé de manière à obtenir, à l'étape d'itération actuelle, des paramètres de prédiction pour l'étape d'itération suivant l'étape d'itération actuelle à l'aide du résultat intermédiaire approximatif (422) pour l'étape d'itération suivant l'étape d'itération actuelle et du multiplicateur (416) ; et une commande qui est réalisée de manière à alimenter en parallèle le dispositif 400) destiné à effectuer l'addition à trois opérandes exacte et le dispositif (412) destiné à effectuer l'addition d'opérandes approximative à l'étape d'itération précédente et à l'étape d'itération actuelle, de sorte que les deux dispositifs puissent fonctionner en parallèle.

2.  Dispositif selon la revendication 1,
    dans lequel le dispositif (400) destiné à effectuer l'addition à trois opérandes exacte requiert, lorsqu'il effectue l'addition à trois opérandes exacte, un premier laps de temps pour l'exécution, et
    dans lequel le dispositif (412) destiné à effectuer l'addition d'opérandes approximative, lorsqu'il effectue l'addition d'opérandes approximative, et le dispositif (417) destiné à calculer des paramètres de prédiction actuels, lorsqu'il effectue le calcul, requièrent ensemble un deuxième laps de temps pour le calcul qui est inférieur ou égal au premier laps de temps.

3.  Dispositif selon l'une des revendications précédentes,
    dans lequel le dispositif (412) destiné à effectuer l'addition d'opérandes approximative est réalisé de manière à fonctionner sans tenir compte du multiplicande (C).

4.  Dispositif selon l'une des revendications précédentes,
    dans lequel le dispositif (412) destiné à effectuer l'addition d'opérandes approximative est réalisé de manière à n'utiliser, du résultat intermédiaire précédent et du module, qu'un nombre de bits de valeur supérieure qui est inférieur à un nombre total de bits du résultat intermédiaire précédent et du module précédent.

5.  Dispositif selon la revendication 4,
    dans lequel le module est un module transformé qui est dérivé, à l'aide d'une règle de transformation, d'un module qui est prédéterminé par un calcul cryptographique, la règle de transformation étant réalisée de sorte que soit connu d'avance un nombre de bits de valeur supérieure du module.

6.  Dispositif selon la revendication 5,
    dans lequel la règle de transformation est réalisée de sorte que le nombre de bits de valeur supérieure du module présente un nombre déterminé de bits de valeur supérieure à un état et les bits restants à un état opposé.

7.  Dispositif selon la revendication 6, dans lequel le dispositif destiné à effectuer l'addition à trois opérandes approximative (412) est réalisé de manière à composer le résultat intermédiaire approximatif de premiers bits (412g) du résultat intermédiaire précédent décalé d'un paramètre de décalage ($s_z$), les premiers bits étant les bits dont les valences ne correspondent pas à des valences du nombre (412d) de bits de valeur supérieure du module transformé, et de deuxièmes bits, les deuxièmes bits étant obtenus d'une combinaison du nombre (412d) de bits de valeur supérieure du module transformé et du paramètre de signe ($v_n$).

8.  Dispositif selon la revendication 7,
    dans lequel le dispositif destiné à effectuer l'addition à trois opérandes approximative est câblé de manière fixe.

9.  Dispositif selon l'une des revendications précédentes,
    dans lequel le dispositif destiné à calculer les paramètres de prédiction actuels est réalisé de manière à calculer une valeur de décalage de résultat intermédiaire ($s_z$) et une valeur de décalage de multiplicande ($s_c$), le module (N) n'étant pas décalé.

10. Dispositif selon la revendication 9,
    dans lequel le dispositif destiné à calculer des paramètres de prédiction actuels est réalisé de manière à calculer un signe de multiplicande ($v_c$) ainsi qu'un signe de module ($v_n$) comme autres paramètres de prédiction.

11. Procédé pour calculer une multiplication d'un multiplicateur (M) et d'une multiplicande (C) en ce qui concerne un module (N) au moyen d'un procédé d'itération à plusieurs étapes d'itération comprenant une étape d'itération précédente, une étape d'itération actuelle et une étape d'itération suivant l'étape d'itération actuelle, dans un calcul cryptographique, le multiplicateur (M), le multiplicande (C) et le module (N) étant des paramètres du calcul cryptographique, aux étapes suivantes consistant à :

à l'étape d'itération précédente,

effectuer (400) une addition à trois opérandes exacte à l'aide d'un résultat intermédiaire précédent (Zvor), du module (N) et du multiplicande (C) et à l'aide de paramètres de prédiction précédents (408), pour obtenir un résultat intermédiaire exact (410) du calcul cryptographique pour l'étape d'itération actuelle ;

effectuer (412) une addition d'opérandes approximative à l'aide du résultat intermédiaire précédent (Zvor) (402) et du module et d'au moins une partie des paramètres de prédiction précédents (408), pour obtenir un résultat intermédiaire approximatif (414) du calcul cryptographique pour l'étape d'itération actuelle ; et

calculer (417) des paramètres de prédiction actuels (418) à l'aide du résultat intermédiaire approximatif (414) du calcul cryptographique et du multiplicateur (416),

à l'étape d'itération actuelle,

effectuer (400') une addition à trois opérandes exacte à l'aide du résultat intermédiaire exact (410) du calcul cryptographique pour l'étape d'itération actuelle, du module (404), du multiplicande (406) et des paramètres de prédiction actuels ;

effectuer (412') une addition d'opérandes approximative à l'aide du résultat intermédiaire actuel (Zakt) (410) et du module et d'au moins une partie des paramètres de prédiction actuels (418), pour obtenir un résultat intermédiaire approximatif (422) du calcul cryptographique pour l'étape d'itération suivant l'étape d'itération actuelle ; et

calculer (417') des paramètres de prédiction pour l'étape d'itération suivant l'étape d'itération actuelle à l'aide du résultat intermédiaire approximatif (422) du calcul cryptographique pour l'étape d'itération suivant l'étape d'itération actuelle et du multiplicateur (416).

**12.** Programme d'ordinateur avec un code de programme pour mettre en oeuvre le procédé selon la revendication 11 lorsque le programme se déroule sur un ordinateur.

## FIG 1

$Z = C \cdot M \ \mathrm{MOD} \ N$

M

**100** UNTERSUCHEN VON STELLEN DES MULTIPLIKATORS M

$S_m$ — **102**

**106** BERECHNEN VON $S_c = S_z - S_m$

$S_c$

$S_z$

Z — N

**104** ERMITTELN DES ZWISCHENERGEBNIS-VERSCHIEBUNGSWERTS

**110**

$S_z$

Z — C

**108** VERSCHIEBEN VON Z,C

$Z \cdot 2^{S_z}$ — $C \cdot 2^{S_c}$ — N

$V_n$

$V_c$

**112** 3-OPERANDEN-ADDITION $Z := Z \cdot 2^{S_z} + V_c \cdot C \cdot 2^{S_c} + V_n \cdot N$

**114** Z

## FIG 2

| M S B | -1 | -2 | -3 | -4 | -5 | -6 | -7 | -8 | · · · · | | L S B | | | | | | | | | | | N

| | | | | | | M S B | -1 | · · · · | | | | L S B | | | | | | C

| | | M S B | -1 | -2 | -3 | · · · · | | | | | L S B | | | | | | Z

$S_Z$

REGISTERBEREICH ZUM BEGINN      UNDERFLOWBUFFER

N: FEST IM REGISTER (LINKSBÜNDIG)      LSB ZU BEGINN DER
C,Z: VARIABEL VERSCHIEBBAR      BERECHNUNG

## FIG 3

$S_Z$    108A

$Z \longrightarrow$    $0 \leq S_Z \leq 5$    $\longrightarrow Z \cdot 2^{S_Z}$

$C \longrightarrow$    $-3 \leq S_C \leq 3$    $\longrightarrow C \cdot 2^{S_C}$

$S_C$    108B

# FIG 4

APPROXIMIERTE
OPERANDEN-ADDITION
FÜR DEN VORHERIGEN
IT.-SCHRITT

BERECHNEN DER
AKTUELLEN VORAUSSCHAU-
PARAMETER

EXAKTE 3-OPERANDEN-
ADDITION FÜR DEN
VORHERIGEN
ITERATIONSCHRITT

APPROXIMIERTE OPERANDEN-
ADDITION FÜR DEN AKTUELLEN
IT.-SCHRITT

BERECHNEN DER NACHHERIGEN
VORAUSSCHAU-PARAMETER

EXAKTE 3-OPERANDEN-
ADDITION FÜR DEN
AKTUELLEN
ITERATIONSCHRITT

# FIG 5

TRANSFORMIEREN DES MODULS (N)
IN EINEN TRANSF. MODUL ($N^T$) $\sim$ 500

ITERATIVES ABARBEITEN DER
MODULAREN MULTIPLIKATION
UNTER VERWENDUNG DES
TRANSF. MODULS ($N^T$) UND
DES VORBEST. BRUCHTEIL DES
TRANSFORMIERTEN MODULS $\sim$ 520

RÜCKTRANSFORMIEREN DES
TRANSFORMIERTEN ERGEBNISSES
UNTER VERWENDUNG DES
MODULS (N) $\sim$ 540

## FIG 6 (MODUL)

## FIG 7 (TRANSFORMIERTER MODUL)

## FIG 8 $(\frac{2}{3}N^T)$

# FIG 9 (TRANSFORMIERTER MODUL MIT RANDOMISIERUNG)

$$p\text{-}s\text{-}m \ \text{BITS} \qquad s \ \text{BITS} \qquad h \ \text{BITS}$$

$$n\text{-}1 \qquad n\text{+}s\text{-}2\text{-}m \quad n\text{-}1 \qquad 0$$

$N^T$ | 01100...000 | XXXX...XXX | XXXX....XXXXX | 000...000 | 000...0000 |

$$p\text{-}1\text{-}m \qquad s\text{-}1 \qquad 0$$

UNDERFLOW BUFFER

$$L(N') = n\text{-}m\text{+}p \ \text{BIT}$$

# FIG 10

710    720    730

| C | N | Z |

SPEICHERT $N^T$

AU

700

# FIG 11

EP 1 576 463 B1

# FIG 12

```
var
        Csh             : integer;
        Zsh             : integer;
        NoZeros         : integer;
        MaxRegBitLength : integer;
        NoTopBits       : integer;
        Debug           : integer;

        Csh             := 3;
        Zsh             := 5;
        NoZeros         := Csh + Zsh;
        MaxRegBitLength := 160;
        NoTopBits       := NoZeros+4;
        Debug           := 1;
end;
```

# FIG 13

```
(**********************************************************)
(* Hilfsfunktionen *)
(**********************************************************)

function ReturnBit(X, i: integer): integer
begin
        if i>=0 then
                return ((X div (2**i)) mod 2);
        else
                return 0;
        end;
end:

function SetBit(var X: integer: i, value: integer)
begin
        if (value<0) or (value>1) then
                writeln("Fehler bei SetBit: Value nicht 1 oder 0!");
        end;
        X :=    ( (X div (2**(i+1))) * (2**(i+1)) +
                value * (2**i) +
                ( X mod (2**i) )            );
end;


function Bitlength(X: integer): integer
var
        i: integer;
begin
        i := 0;
        while (X>0) do
                X        := X div 2;
                i        := i+1;
        end;
        return i:
end;
```

# FIG 14AA

```
(************************************************************)
(                                                          )
(* ZDN - Modulare Multiplikation *)
(************************************************************)
(                                                          )


function MultMod(C, M. N: integer): integer
external
        (***** Konstanten *****)
        Csh                     : integer ;
        Zsh                     : integer ;
        NoZeros                 : integer ;
        MaxRegBitLength              : integer ;
        NoTopBits               : integer ;
        Debug                   : integer ;
var

        (***** Zustand des Rechenwerks *****)
        Z       : integer;
        ApproxZ : integer;
        Lsb     : integer;
        cur_Lsb : integer;
        LAccu   : integer;
        c       : integer;
        (***** Bestimmungsgroessen fuer 3-Op-Addition ***** )
        VZ_C    : integer;
        VZ_N    : integer;
        s_Z     : integer;
        s_C     : integer;
        (***** Bestimmungsgroessen fuer Multiplikation *****)
        m       : integer;
        LA      : integer;
        s_M     : integer;
```

**FIG 14AB**

```
begin
    if C>=N then
            writeln("Fehler: C>=N");
    end;
    (***** Justierung *****)
    LAccu := BitLength(M)+I;
    Lsb := MaxRegBitLength - 1 - BitLength(N);
    if Lsb<9 then
            writeln("Fehler: N zu grass");
    end;
    N         : = N * (2**Lsb);
    C         : = C * (2**Lsb);
    (***** Initialisierung *****)
    Z         : = 0;
    ApproxZ : = Z;
    c         : = 0:
    VZ_C    : = 0:
    VZ_N    : = 0;
    s_Z     : = 0;
    s_C     : = 0:
    s_M     : = 0;
    m         : = LAccu;
    cur Lsb  := Lsb;
    LA        : = ReturnBit(M. MaxRegBitLength-1);
```

# FIG 14B

```
(*****Modulare Multiplikation*****)
while ( (m>0) or (c>0) ) do
        LAModulo(ApproxZ, N, c, s_Z, VZ_N);
        Nachbearbeitung_LAModulo(s_Z, VZ_N, c, m);

        LAMultiplication(M, m, cur_Lsb, s_Z, s_M, LA, VZ_C);
        Nachbearbeitung_LAMultiplication(s_M, s_C, s_Z, VZ_N);

        Shift(C, s_C);

        ApproxZ := (Z div(2**(MaxRegBitLength-1-NoTopBits)))*(2**(MaxRegBitLength-1-NoTopBits))
        ThreeOperandAddition(Z, s_Z, VZ_C, C, VZ_N, N);

        m       := m - s_M;
        c       := c - s_C;
        cur_Lsb := cur_Lsb + s_C;
end;

if (ReturnBit(Z, MaxRegBitLength-1)=1) then
        ThreeOperandAddition(Z, 0, 0, 0, 1, N);
end;

Z       := Z div (2**Lsb);
return Z;
end;
```

# FIG 15

```
(*****DreiOperandenAddition****)

function ThreeOperandAddition(var Z:  integer; s_Z. VZ_C. C. VZ_N. N: integer)
external
        MaxRegBitlength          : integer;
begin
        Z := ( Z * (2**s_Z) + VZ_C * C + VZ_N * N ) mod (2**MaxRegBitLength);
end;


function Shift(var X: integer; s_X: integer)
begin
        if (s_x>=0) then
                X          := X*(2**s_X);
        else
                X          := X div (2**(-s_X));
        end;
end:
```

# FIG 16A

```
(*****LA-Modulo*****)

function LAModulo(Z, N , c : integer; var s_Z, VZ_N : integer)
external
        MaxRegBitLength    : integer;
        Zsh            : integer;
        NoTopBits      : integer;
var
        VZ        : integer;
        cur_Zsh : integer;
        i         : integer;
begin
        cur_Zsh := min(Zsh. c);
        (*****Approximative 3-Op-Add*****)
        N        := (N div (2**NoTopBits)) * (2**NoTopBits);
        Z        := ThreeOperandAddition(Z, s_Z, 0, 0, VZ_N, N);


        (***** 0-1-Sucher *****)
        VZ       := ReturnBit(Z, MaxRegBitLength-1);
        s_Z      := 0;
        VZ_N     := 2*VZ - 1;
        while ( (VZ=ReturnBit(Z, MaxRegBitLength-2-s_Z)) and (s_Z<cur_Zsh) ) do
                s_Z       := s_Z+l;
        end;


        if (VZ=ReturnBit(Z, MaxRegBitLength-2-s_Z)) then
                s_Z := cur_Zsh;
                VZ_N := 0;
        end;
end;
```

# FIG 16B

```
function Nachbearbeitung_LAModulo(var s_Z, VZ_N : integer; c, m : integer)
external
        NoZeros          : integer;
begin
        if ( (c< =NoZeros) and (m>0) and (s_Z>0) ) then
                s_Z       : = 0;
                VZ_N      : = 0;
        end;
end;
```

# FIG 17A

```
(***** LA-Multiplication *****)

function LAMultiplication(M, m, cur_Lsb, s_Z: integer; var s_M, LA, VZ_C : integer)
external
        Csh : integer;
var
        cur_Csh : integer;
begin
        cur_Csh := min(cur Lsb, Csh);
        s_M     := 0;
        (***** 0-1-Sucher *****)
        while ( (LA=ReturnBit(M,m-1)) and (s_M<(cur_Csh+s_Z)) and (m>0) ) do
                s_M     := s_M + 1;
                m       := m - 1;
        end;


        if      ( (LA=ReturnBit(M,m-1)) ) then
                VZ_C    := 0;
elsif ( not(LA=ReturnBit(M,m-1)) and not(LA=ReturnBit(M,m-2)) ) then
                VZ_C    := 1 - 2*LA;
                LA      := 1 - LA;
elsif ( not(LA=ReturnBit(M,m-1)) and (LA=ReturnBit(M,m-2)) ) then
        if (s_M=cur_Csh+s_Z) then
                VZ_C    : = 0;
        else
                VZ_C    := 1 - 2*LA;
                s_M     := s_H + 1;
        end;
    end;
end;
```

# FIG 17B

```
function Nachbearbeitung_LAMultiplication(s_M : integer; var s_C, s_Z, VZ_N : integer)
external
        Csh     : integer;
begin
        s_C     := s_Z - s_M;

        if (s_C > Csh) then
                s_C     := Csh;
                s_Z     := s_C + s_M
                VZ_N    := 0;
        end;
end;
```

# FIG 18
## (STAND DER TECHNIK)

```
          ┌─────────┐
          │  START  │─────900
          └─────────┘
               │
          ╱───────────╱
         ╱   M,C,N   ╱
        ╱───────────╱
               │
          ┌─────────┐
          │  Z := 0 │
          └─────────┘
               │
          ┌─────────┐
          │ LA := 0 │
          └─────────┘
               │
          ┌──────────┐
          │ m := L(M)│
          └──────────┘
               │
          ┌─────────┐
          │  n := 0 │
          └─────────┘
               │
               ○◄──────────────────┐
               │                    │
               ○──────────┐         │
               │          │         │
    ┌──────────────┐  ┌──────────────┐
910 │ GEN_Mult_LA  │  │ GEN_Mod_LA   │─930
    │   (a,sz)     │  │   (b,sN)     │
    └──────────────┘  └──────────────┘
          │                 │
    ┌──────────────┐  ┌──────────────┐
920 │  SHL Z, sz   │  │  SHL N, sN   │─940
    └──────────────┘  └──────────────┘
          │ Z'          N' │
          └────────○───────┘
                   │
         ┌──────────────────┐
     950 │      Z :=        │
         │  Z'+a·c+b·N'     │
         └──────────────────┘
                   │
          ╱─────────────────╲
         ⟨ m=0 AND n=0?      ⟩────────┘
          ╲─────────────────╱  NEIN
              │ JA
          ╱─────────╲
         ⟨   Z<0?    ⟩──────────┐
          ╲─────────╱  NEIN     │
              │ JA              │
          ┌──────────┐          │
          │ Z := Z+N │          │
          └──────────┘          │
               │                │
               ○◄───────────────┘
               │
          ╱───────╱
         ╱   Z   ╱
        ╱───────╱
               │
          ┌─────────┐
    960───│  STOPP  │
          └─────────┘
```

# FIG 19
## (STAND DER TECHNIK)

```
                    ┌─────────────┐
                    │    START    │
                    └─────────────┘
                           │
                    ┌──────────────┐
                    │    b, sN     │──── 1000
                    └──────────────┘
                           │
                    ┌──────────────┐
                    │   sN := 0    │──── 1010
                    └──────────────┘
                           │
                    ┌──────────────┐
                    │  ZDN := ⅔·N  │──── 1020
                    └──────────────┘
                           │
        1030               │
                    ┌──────────────────┐
                 JA │  n=0.OR. sN=-k   │ NEIN
                    └──────────────────┘
                           │
                    ┌──────────────┐
                    │   n := N-1   │──── 1040
                    └──────────────┘
                           │
                    ┌──────────────┐
                    │  sN := sN-1  │──── 1060
                    └──────────────┘
                           │
                    ┌──────────────┐
                    │ ZDN := ZDN/2 │──── 1080
                    └──────────────┘
                           │
                    ┌──────────────┐
                    │ Abs(Z) > ZDN?│──── 1100
                    └──────────────┘
              JA                    NEIN
  ┌──────────┐              ┌──────────────┐
  │  b := 0  │              │    b :=      │──── 1120
  └──────────┘              │  2·Z[SIGN]-1 │
  1140                      └──────────────┘
                           │
                    ┌──────────────┐
                    │  n := n+sz   │──── 1160
                    └──────────────┘
                           │
                    ┌──────────────┐
                    │ sN := sN + sz│──── 1180
                    └──────────────┘
                           │
                    ┌──────────────┐
                    │  n > MAX -k? │──── 1200
                    └──────────────┘
              JA                    NEIN
  ┌──────────┐              ┌──────────────┐
  │ cur_k := │              │  cur_k := k  │──── 1220
  │ MAX-k+1  │              └──────────────┘
  └──────────┘
  1240
                    ┌─────────────┐
                    │    STOPP    │
                    └─────────────┘
```